(19) **Europäisches Patentamt European Patent Office Office européen des brevets**

(11) **EP 2 710 831 B1**

(12) **FASCICULE DE BREVET EUROPEEN**

(45) Date de publication et mention de la délivrance du brevet:
**28.02.2018 Bulletin 2018/09**

(21) Numéro de dépôt: **12716340.0**

(22) Date de dépôt: **13.04.2012**

(51) Int Cl.:
*H04W 24/02* *(2009.01)*

(86) Numéro de dépôt international:
**PCT/EP2012/056755**

(87) Numéro de publication internationale:
**WO 2012/156158 (22.11.2012 Gazette 2012/47)**

(54) **PROCÉDÉ ET SYSTÈME DE RÉDUCTION DES INTERFÉRENCES CO-CANAL DUES AU DÉPLOIEMENT DE FEMTOCELLS DANS UN RÉSEAU MACRO-CELLULAIRE**

VERFAHREN UND SYSTEM ZUR VERRINGERUNG DER GLEICHKANALINTERFERENZ AUFGRUND DES EINSATZES VON FEMTOZELLEN IN EINEM MAKROZELLULAREN NETZWERK

METHOD AND SYSTEM FOR REDUCING CO-CHANNEL INTERFERENCE DUE TO THE DEPLOYMENT OF FEMTOCELLS IN A MACRO-CELLULAR NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.05.2011 FR 1154322**

(43) Date de publication de la demande:
**26.03.2014 Bulletin 2014/13**

(73) Titulaire: **SAGEMCOM BROADBAND SAS**
**92500 Rueil Malmaison (FR)**

(72) Inventeurs:
• **LALAM, Massinissa**
**F-92500 Rueil Malmaison (FR)**
• **LESTABLE, Thierry**
**F-92500 Rueil Malmaison (FR)**

(74) Mandataire: **Le Guen-Maillet**
**5, place de Newquay**
**BP 70250**
**35802 Dinard Cedex (FR)**

(56) Documents cités:
**EP-A1- 2 152 041       US-A1- 2009 042 593**
**US-A1- 2009 316 585**

• **ARULSELVAN N ET AL: "Distributed power control mechanisms for HSDPA femtocells", 2009 IEEE 69TH VEHICULAR TECHNOLOGY CONFERENCE; APRIL 26-29, 2009, BARCELONA, SPAIN, IEEE, PISCATAWAY, NJ, USA , 26 avril 2009 (2009-04-26), pages 1-5, XP002655653, DOI: 10.1109/VETECS.2009.5073506 ISBN: 978-1-4244-2517-4 Extrait de l'Internet: URL:http://ieeexplore.ieee.org/xpls/abs_al l.jsp?arnumber=5073506 [extrait le 2011-08-03]**

## Description

La présente invention concerne un procédé et un système de réduction des interférences co-canal dues au déploiement de femtocells dans un réseau macro-cellulaire.

Il est connu de déployer des stations de base pour mettre en place un service de téléphonie mobile sur un territoire donné. Le réseau ainsi formé est appelé par la suite réseau macro-cellulaire.

Les besoins d'atteindre un débit plus élevé par utilisateur de ce service de téléphonie mobile, d'augmenter la capacité globale en terme de nombre d'utilisateurs connectés simultanément sur une station de base ainsi que d'améliorer la couverture de ce réseau macro-cellulaire (notamment en bordure de cellules) sans avoir à déployer de nouvelles stations de bases, ont conduit à l'apparition d'une nouvelle technologie connue sous le nom de cellules femto ou femtocells.

Une femtocell est une station de base de portée réduite par rapport à celle d'une station de base du réseau macro-cellulaire dont la portée s'étend sur plusieurs centaines de mètres voire de kilomètres.

Une femtocell est déployée généralement (mais pas exclusivement) chez un usager et fournit un accès au réseau de téléphonie mobile sans que cet usager n'ait à changer de terminal mobile. En pratique, une femtocell est connectée ou intégrée à la passerelle domestique d'un abonné à Internet (câble, ADSL, ...). Elle utilise l'accès Internet de cet abonné pour se connecter au réseau de téléphonie cellulaire via une connexion sécurisée. Elle permet ainsi d'améliorer à moindre coût la couverture du réseau macro-cellulaire à l'intérieur de l'habitat.

Les femtocells sont déployées au sein d'un réseau macro-cellulaire généralement selon une politique d'accès restreint. A cet effet, une femtocell dispose d'une liste de terminaux mobiles (*Closed Subscriber Group* - CSG en anglais) qui sont autorisés à se connecter au réseau de téléphonie mobile via cette femtocell. Si le terminal mobile autorisé est très proche de la femtocell, ce terminal mobile s'attache à cette femtocell et accède au réseau de téléphonie mobile via Internet.

Il peut se produire aussi le cas où toutes les femtocells (ou au moins deux d'entre elles) partagent une liste CSG commune. Autrement dit, il n'est pas possible à un terminal du réseau macro-cellulaire de se connecter à l'une des femtocells s'il ne fait pas partie de cette liste, et tout terminal autorisé par cette liste CSG peut se connecter à n'importe laquelle de ces femtocells.

Toutefois, le déploiement de femtocells en mode d'accès restreint peut avoir un impact très négatif sur la qualité de service offerte aux utilisateurs qui utilisent un terminal mobile qui n'est pas autorisé à accéder à ces femtocells. En effet, lorsqu'un tel terminal mobile se trouve à proximité d'une de ces femtocells et que cette femtocell opère sur le même canal que celui de la station de base du réseau macro-cellulaire auquel est attaché ce terminal mobile, la qualité de service offerte par le réseau macro-cellulaire est fortement dégradée du fait des interférences co-canal entre la station de base et cette femtocell.

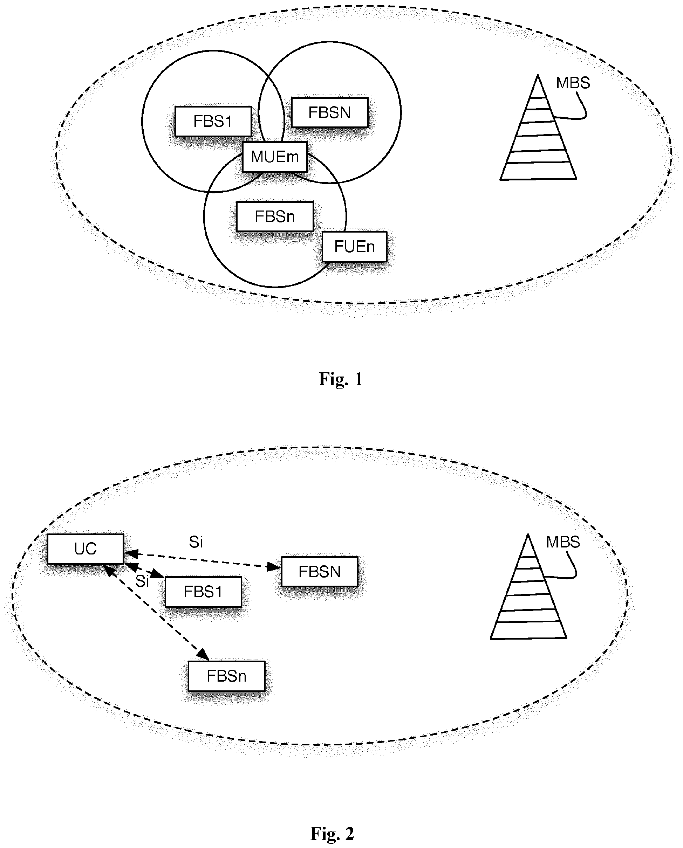

La Fig. 1 représente schématiquement le déploiement de femtocells dans un réseau macro-cellulaire pour illustrer le problème d'interférence co-canal entre ce réseau et ces femtocells.

Selon cet exemple, on considère un ensemble de N femtocells FBSn déployées dans une même zone géographique (et donc interférant les unes avec les autres) sous couverture d'un réseau macro-cellulaire. Chaque femtocell FBSn utilise le même canal que le réseau macro-cellulaire, c'est-à-dire la même fréquence porteuse $f$ (déploiement co-canal). Chaque femtocell FBSn peut fixer sa puissance d'émission $P_t^n$ qui peut varier dans une plage de puissance s'étendant de $P_{min}^n$ à $P_{max}^n$.

Un terminal mobile du réseau macro-cellulaire est noté par la suite MUE (Macrocell User Equipment). Ce terminal MUE ne peut se connecter qu'au réseau macro-cellulaire c'est-à-dire qu'il ne fait partie d'aucune des listes CSG des $N$ femtocells. Ce terminal ne peut donc se rattacher qu'à la station de base MBS.

Un terminal mobile autorisé à se rattacher à une femtocell FBSn est noté par la suite terminal FUEn (Femtocell User Equipment). Ce terminal peut se rattacher soit à la femtocell FBSn soit à la station de base MBS.

Dans la pratique, M terminaux MUE interfèrent également entre eux et avec les N femtocells. On les notera par la suite terminaux MUEm.

La qualité de service perçue par un terminal est quantifiée habituellement par le rapport signal à interférence-plus-bruit, en abrégé SINR (*Signal to Interference-plus-Noise Ratio* en anglais). Le SINR correspond au rapport entre la puissance reçue par la station de base MBS sur la somme de toutes les autres puissances reçues par les stations de base interférentes et du bruit thermique.

Ainsi, le SINR perçu par un terminal MUEm, noté $\gamma_{MUEm}$, est donné par :

$$\gamma_{MUE_m} = \frac{P_r^{MUE_m, macro}}{\sum_{n=1}^{N} P_r^n + \sigma_{MUE_m}^2} \qquad (1)$$

où $P_r^{MUE_m, macro}$ est la puissance reçue par le terminal MUEm qui est émise par la station de base du réseau macro-cellulaire auquel est rattaché ce terminal, $P_r^n$ est la puissance reçue par le terminal MUEm qui est émise par la femtocell FBSn, et $\sigma_{MUE_m}^2$ est la somme de la puissance du bruit thermique environnant et de la puissance reçue par le terminal MUEm provenant des autres stations de base du réseau macro-cellulaire (vue comme du bruit blanc).

La puissance en provenance de la femtocell FBSn et reçue par le terminal MUEm peut se mettre sous la forme $P_r^n = a_{m,n} P_t^n$, qui s'exprime par le produit de la puissance émise $P_t^n$ par la femtocell FBSn par le coefficient d'atténuation $a_{m,n}$ dû au canal séparant la femtocell FBSn du terminal MUEm

Pour s'assurer d'une qualité de service minimale perçue par le terminal MUEm, le SINR $\gamma_{MUE_m}$ doit être supérieur ou égal à une valeur seuil $\gamma_{MUE}^{target}$.

De manière similaire, le SINR perçu par le terminal FUEn qui serait servi par la femtocell FBSn, noté $\gamma_{FUE_n}$, est donné par :

$$\gamma_{FUE_n} = \frac{P_r^n}{\sum_{q \neq n} P_r^q + P_r^{FUE_n, macro} + \sigma_{FUE_n}^2} \qquad (2)$$

où $P_r^n$ est la puissance reçue par le terminal FUEn qui est émise par la femtocell FBSn, $P_r^q$ est la puissance reçue par le terminal FUEn qui est émise par la femtocell FBSq différente de FBSn ($\forall 1 \leq q \leq N$, $q \neq n$), $P_r^{FUE_n, macro}$ est la puissance reçue par le terminal FUEn qui est émise par la station de base du réseau macro-cellulaire dominante pour ce terminal (c'est-à-dire à laquelle ce terminal se rattacherait s'il utilisait le réseau macro-cellulaire), et $\sigma_{FUE_n}^2$ est la somme de la puissance du bruit thermique environnant et de la puissance reçue par le terminal FUEn provenant des autres stations de base du réseau macro-cellulaire (vue comme du bruit blanc).

La puissance en provenance d'une femtocell FBSq ($\forall 1 \leq q \leq N$, inclut la femtocell servante) et reçue par le terminal FUEn peut se mettre sous la forme $P_r^q = b_{n,q} P_t^q$, qui s'exprime par le produit de la puissance émise $P_t^q$ par la femtocell FBSq par le coefficient d'atténuation $b_{n,q}$ dû au canal séparant le terminal FUEn de la femtocell FBSq.

Il est connu de réduire les interférences co-canal entre femtocells et stations de base d'un réseau macro- cellulaire par une minimisation des puissances d'émission de ces femtocells (« Downlink Power Control in Co-Channel Macrocell Femtocell Overlay », X. Li et al., IEEE 43rd Annual Conference on Information Sciences and Systems (CISS'09), pp. 383-388, June 2009).

Un tel procédé consiste à minimiser la somme des puissances d'émission $\left\{ P_t^n \right\}_{1 \leq n \leq N}$ des N femtocells sous contrainte du maintien d'une qualité de service minimale à la fois pour un terminal MUE et un terminal FUEn.

En termes mathématiques, ce problème de minimisation sous contrainte s'exprime par :

$$\min_{P_t^n} \sum_{n=1}^{N} P_t^n \qquad (3)$$

sous la contrainte de l'équation (4) qui porte sur toutes les puissances d'émission des N femtocells FBSn pour assurer la qualité de service du terminal MUEm :

$$\forall m \in \left\{\, 1, M \,\right\} , \quad \sum_{n=1}^{N} a_{m,n} P_t^n \leq \frac{P_r^{MUE_m, macro}}{\gamma_{MUE}^{\text{target}}} - \sigma_{MUE_m}^2 \qquad (4)$$

et sous la contrainte de l'équation (5) qui porte sur toutes les puissances d'émission des $N$ femtocells FBSn pour assurer la qualité de service du terminal FUEn :

$$\forall m \in \left\{\, 1, M \,\right\} , \quad b_{n,m} P_t^n \leq \gamma_{MUE}^{\text{target}} \left( \sum_{q \neq n} b_{n,q} P_t^q + P_r^{FUE_n, macro} + \sigma_{FUE_n}^2 \right) \qquad (5)$$

L'équation (3) est résolue, en pratique, soit par une approche dite centralisée, c'est-à-dire par un organe central, soit par une approche dite distribuée, c'est-à-dire que chaque femtocell optimise sa puissance d'émission selon les mesures de puissances qu'elle obtient localement.

L'optimisation des puissances d'émission selon l'équation (3) en utilisant le procédé décrit dans l'article de Li et al. (« Downlink Power Control in Co-Channel Macrocell Femtocell Overlay », X. Li et al., IEEE 43rd Annual Conference on Information Sciences and Systems (CISS'09), pp. 383-388, June 2009) pose des problèmes en pratique.

En effet, il est nécessaire de connaître précisément les distances entre les femtocells et les terminaux macro-cellulaires MUEm pour pouvoir estimer les coefficients d'atténuation $a_{m,n}$ dus aux canaux séparant les femtocell FBSn du terminal MUEm ainsi que les distances entre chaque terminal FUEn et chaque femtocell FBSq pour pouvoir estimer les coefficients d'atténuation $b_{n,q}$ dus aux canaux séparant les terminaux FUEn des femtocells FBSq. Cette contrainte est extrêmement forte et difficile à obtenir en pratique.

Pour obtenir ces distances précisément, un signal de type GPS (*Global Positioning System* en anglais) peut être utilisé. Toutefois, cet usage n'est pas adapté lorsque des femtocells sont déployées à l'intérieur d'un bâtiment (localisation la plus commune), environnement peu propice aux signaux GPS.

Par ailleurs, cette optimisation des puissances d'émission requiert que des mesures de puissance soient réalisées, notamment, par les terminaux MUEm. Ceci requiert donc la présence d'au moins un terminal MUE dans le réseau macro-cellulaire pour optimiser ces puissances d'émission afin d'évaluer les contraintes de l'équation (4).

Il est connu le document de brevet US 2009/316585 A1 qui décrit des points d'accès de femtocells qui basculent entre un mode de surveillance de réseau et un mode de communication, le mode de surveillance permettant de recueillir des informations et de configurer automatiquement les points d'accès.

Il est aussi connu le document de brevet US 2009/042593 A1 qui décrit un procédé d'ajustement de puissance de transmission d'un point d'accès d'une femtocell, de sorte que les interférences causées par la femtocell envers une macrocellule sont limitées tout en fournissant un niveau de couverture acceptable pour des terminaux associés à la femtocell .

Il est aussi connu le document « Distributed Power Control Mechanisms for HSDPA Femtocells », N. Arulselvan et al, 2009, 69th IEEE Conference on Vehicular Technology, qui décrit des schémas de contrôle de puissance visant à améliorer le débit effectif de données pour des utilisateurs d'une femtocell tout en limitant la dégradation induite dans une macrocellule co-localisée.

Il est aussi connu le document de brevet EP 2152041 AI qui décrit un procédé pour minimiser l'interférence envers des dispositifs mobiles opérant dans un réseau de communication qui comprend un contrôleur centralisé et un certain nombre de femtocells, dans lequel un ordre de priorité d'attribution de puissance pour chaque femtocell est déterminé, et dans lequel une puissance à affecter à chaque station de base gérant une telle femtocell est calculée sur la base de l'ordre de priorité.

Le problème résolu par la présente invention est de remédier aux inconvénients suscités.

A cet effet, la présente invention concerne un procédé de réduction des interférences co-canal dues au déploiement de $N$ femtocells dans un réseau macro-cellulaire, et un système correspondant, tels que présentés dans les revendications annexées.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

La Fig. 1 représente schématiquement le déploiement de femtocells dans un réseau macro-cellulaire.

La Fig. 2 représente schématiquement un exemple de déploiement de femtocells dans un réseau macro-cellulaire.

La Fig. 3 représente une illustration d'une mise en oeuvre centralisée du procédé.

La Fig. 4 représente une illustration d'une mise en oeuvre distribuée du procédé.

Les Fig. 5a et 5b représentent schématiquement des modes de réalisation de la trame d'un signal Si qui est échangé entre l'organe central UC et une femtocell FBSn.

La Fig. 6 représente un exemple de mise en oeuvre centralisée du mode préféré de réalisation du procédé décrit en relation avec la Fig. 3 lorsque le signal Si utilise des trames décrites en relation avec les Figs. 5a et 5b.

La Fig. 7 représente un exemple de mise en oeuvre distribuée du mode préféré de réalisation du procédé décrit en relation avec la Fig. 4 lorsque le signal Si utilise des trames décrites en relation avec les Figs. 5a et 5b.

L'exemple de système de la Fig. 2 n'est donné ici qu'à titre d'illustration. Selon cet exemple, le système est formé par un ensemble de $N$ femtocells FBSn déployées sous couverture d'un réseau macro-cellulaire ici matérialisé par une station de base MBS. Une politique d'accès restreint est mise en oeuvre pour les femtocells comme expliqué dans la partie introductive.

Les femtocells interfèrent les unes avec les autres mais également avec la station de base MBS car ces $N$ femtocells FBSn et la station de base MBS utilisent la même bande fréquentielle d'émission (déploiement co-canal).

Chaque femtocell FBSn est prévue pour émettre un signal à une puissance d'émission particulière $P_t^n$ qui peut varier dans une plage de puissance s'étendant de $P_{min}^n$ à $P_{max}^n$.

De plus, chaque femtocell FBSn est prévue pour effectuer deux types de mesures de puissance appelées par la suite RSSI et RSRP.

Une mesure *RSSI* (*Received Signal Strength Indicator*) est une mesure de la puissance d'un signal reçu par la femtocell FBSn. Ce signal peut être la résultante de plusieurs signaux émis par une ou plusieurs autres femtocells et/ou par une ou plusieurs stations de base du réseau macro-cellulaire. Cette mesure est similaire à celle définie pour les terminaux mobiles de la norme UMTS/HSPA (*UTRA carrier RSSI,* défini dans 3GPP TS 25.215 V9.2.0 (2010-03), « Physical layer ; Measurements (FDD) (Release 9) »*, subclause 5.1.3*) ou encore à celle définie pour les terminaux mobiles de la norme LTE (*E-UTRA carrier RSSI,* défini dans 3GPP TS 36.214 V9.2.0 (2010-06), « Evolved Universal Terrestrial Radio Access ; Physical layer ; Measurements (FDD) (Release 9) »*, subclause 5.1.3).*

Une mesure RSRP (*Reference Signal Received Power*) est une mesure de la puissance d'un signal qui a été reçu par une femtocell et qui a été émis soit par une autre femtocell particulière soit par une station de base particulière du réseau macro-cellulaire. Une mesure RSRP s'effectue, par exemple, sur un canal où des signaux de référence sont toujours émis par une station de base du réseau macro-cellulaire ou une femtocell. En UMTS/HSPA, une mesure RSRP est définie pour un terminal mobile (*CPICH RSCP,* défini dans 3GPP TS 25.215 V9.2.0 (2010-03), « Physical layer ; Measurements (FDD) (Release 9) »*, subclause 5.1.1*) tandis qu'en LTE cette mesure est définie pour une station de base (*DL RS TX power*, défini dans 3GPP TS 36.214 V9.2.0 (2010-06), « Evolved Universal Terrestrial Radio Access ; Physical layer ; Measurements (FDD) (Release 9) »*, subclause 5.2.1).*

Lorsqu'une femtocell FBSn effectue des mesures de type RSSI ou de type RSRP sur sa bande d'émission, elle n'émet pas dans le même temps sinon elle mesurerait sa propre émission dont le niveau serait tellement fort qu'elle l'éblouirait.

Les femtocells FBSn sont reliées à un organe central UC qui peut être, par exemple, soit un ordinateur, soit une passerelle de femtocell (*femtocell-gateway* en anglais), soit encore une femtocell « maître » dans la mesure où cette dernière peut adresser les autres femtocells du réseau. En LTE, les stations de base peuvent communiquer directement entre elles (c'est-à-dire sans passer par un organe du réseau coeur de l'opérateur de téléphonie mobile) par le biais d'une interface appelée X2. Le support physique de l'interface X2 n'est pas explicitement défini, mais uniquement ses fonctions logiques. Cette interface peut servir, par exemple, à s'échanger des données en vue d'une coopération ou à assurer une continuité de service lorsqu'un terminal se déplace et qu'il doit changer de station de base en cours de communication (*hand-over* en anglais). Les femtocells peuvent donc être reliées entre elles et/ou être reliées à l'organe central UC.

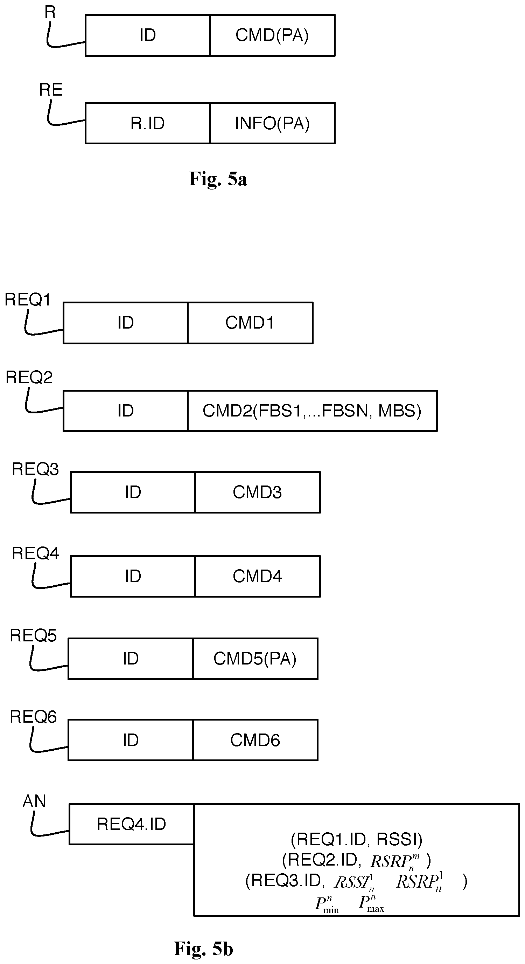

La liaison entre une femtocell FBSn et l'organe central UC, qui peut être soit filaire soit sans fil, permet une communication bidirectionnelle d'un signal Si dont les trames sont décrites en relation avec les Figs. 5a et 5b.

L'organe central UC est prévu pour déterminer quelles sont les femtocells qui sont connectées au réseau et ce pour déterminer le nombre N de femtocells dont la puissance d'émission doit être optimisée. En effet, comme chaque femtocell doit s'enregistrer à chacun de ses démarrages, l'organe central UC a connaissance de l'ajout de toute nouvelle femtocell et peut ainsi régulièrement tester si une femtocell est en activité. L'organe central UC peut alors déterminer par ce mécanisme si une femtocell est nouvellement connectée au réseau ou n'est plus connectée au réseau.

Selon l'un de ses aspects, la présente invention concerne un procédé de réduction des interférences co-canal dues au déploiement de $N$ femtocells dans un réseau macro-cellulaire. Ce procédé comporte une étape 1 de prise de mesures de puissance de signaux émis sur ce réseau, une étape 3 d'optimisation des puissances d'émission des femtocells en fonction de ces mesures et une étape 4 d'attribution à chaque femtocell de sa puissance d'émission.

Au cours de l'étape 1 de prise de mesures, les mesures de puissance sont uniquement prises par les femtocells et ces mesures sont ordonnées temporellement par l'organe central UC. De plus, au cours de l'étape 3 d'optimisation, les puissances d'émission des N femtocells sont maximisées sous des contraintes de maintien d'une qualité de service minimale des terminaux MUEm qui seraient rattachés aux stations de base du réseau macro-cellulaire. Ces contraintes sont établies grâce aux mesures de l'étape 1.

Ainsi, la qualité de service pour les terminaux FUEn (qui seraient rattachés aux femtocells) n'est donc pas prise en compte dans les contraintes comme cela est fait dans l'état de la technique. Ceci n'a que peu d'incidence sur le fonctionnement d'un terminal FUEn qui, s'il n'a pas une bonne qualité de service lorsqu'il est rattaché à une femtocell FBSn, peut se rattacher à une station de base du réseau macro-cellulaire pour que la qualité de service qu'il perçoit augmente.

La qualité de service des terminaux FUEn est portée par la fonction de coût à maximiser à l'étape 3 qui s'exprime par :

$$\max_{P_t^n} \quad c = \sum_{n=1}^{N} P_t^n \qquad (6)$$

où $P_t^n$ est la puissance d'émission de la femtocell FBSn.

L'optimisation se fait sous la contrainte de maintenir une qualité de service minimale pour un terminal MUEm au voisinage de chaque femtocell FBSn. Afin de s'affranchir de la présence d'un ou plusieurs terminaux MUEm dans le réseau pour l'établissement de contraintes, comme c'est le cas dans l'état de la technique (équation (4)), les capacités de mesures des femtocells FBSn sont mises à contribution pour établir une contrainte de qualité de service pour un terminal MUEm virtuel qui se trouverait au voisinage de la femtocell FBSn.

Les mesures étant effectuées par la femtocell FBSn, un coefficient ρ est introduit afin de prendre en compte la différence de position du terminal MUEm virtuel et de la femtocell FBSn. Ce coefficient traduit l'atténuation de la puissance d'émission en provenance de la femtocell FBSn en présence d'un léger déplacement du point de mesure (représentant le terminal MUEm virtuel). Lors de ce déplacement, le pire cas est envisagé, à savoir que si le terminal MUEm virtuel s'éloigne de la femtocell FBSn, il se rapproche de toutes les autres femtocells FBSm et de la station de base macro-cellulaire : l'atténuation ρ associée à la puissance de la femtocell FBSn est alors vue comme un gain égal à 1/ρ vis-à-vis des autres sources de puissances. Ce coefficient peut être égal à un, ce qui correspond alors à un positionnement du terminal MUEm virtuel exactement au niveau de la femtocell FBSn.

Au final, la contrainte d'un terminal MUEm virtuel au voisinage de chaque femtocell FBSn, qui est déduite de la contrainte d'un terminal MUEm de l'équation (4) en négligeant le bruit thermique, est donnée par :

$$\forall n \in \{ 1, N \} , \quad P_t^n + \sum_{m \neq n} \frac{\alpha_{n,m}}{\rho^2} P_t^m \leq \frac{P_r^{n,macro}}{\rho^2 \gamma_{MUE}^{target}} - \sigma_n^2 \leq \frac{P_r^{n,macro}}{\rho^2 \gamma_{MUE}^{target}} \qquad (7)$$

où $P_t^n$ est la puissance d'émission d'une femtocell FBSn, $P_t^m$ est la puissance d'émission d'une femtocell FBSm, $\alpha_{n,m}$ est le coefficient d'atténuation dû au canal séparant une femtocell FBSm de la femtocell FBSn, $P_r^{n,macro}$ est la puissance reçue par la femtocell FBSn d'un signal qui a été émis par la station de base du réseau macro-cellulaire considérée comme dominante par la femtocell FBSn, et $\sigma_n^2$ est la puissance du bruit thermique environnant perçu par la femtocell FBSn (négligée par la suite).

Le coefficient ρ traduit la couverture d'une femtocell FBSn au-delà de laquelle un terminal MUEm verrait un SINR supérieur à $\gamma_{MUE}^{target}$.

Par ailleurs, il n'est pas nécessaire de connaître les distances entre les femtocells et entre femtocells et stations de base du réseau macro-cellulaire car les coefficients d'atténuation sont déduits, comme on le verra par la suite, de mesures de puissance prises par les femtocells.

Toutefois, l'ajout de la connaissance exacte de la topologie du réseau de femtocells et des stations de base macro-cellulaire au niveau de la femtocell FBSn permet d'affiner la contrainte liée à un déplacement autour de cette dernière.

Ainsi, l'éloignement de la position du terminal MUEm virtuel par rapport à la femtocell FBSn n'entraîne pas nécessairement un rapprochement vers les autres femtocells FBSm et les stations de base du réseau macro-cellulaire (vu alors comme un gain), mais peut entraîner un éloignement de certaines femtocells FBSm ou de certaines stations de base et donc être perçu par le terminal MUEm virtuel comme une atténuation de la puissance reçue en provenance de ces dernières.

Selon une variante, les puissances d'émission estimées des femtocells sont pondérées lors de leur optimisation, c'est-à-dire que ce problème de maximisation sous contrainte s'exprime par :

$$\max_{P_t^n} \quad c = \sum_{n=1}^{N} c_n * P_t^n \tag{8}$$

avec $c_n$ des coefficients de pondération.

Cette variante permet de hiérarchiser l'importance donnée à chacune des femtocells pour, par exemple, fournir une qualité de service plus importante à certaines d'entre elles.

Si on considère une seule femtocell dans le réseau, alors la solution de l'équation (6) ou (8) sous la contrainte de l'équation (7) est donnée par :

$$\hat{P}_t^n = \frac{P_r^{n,macro}}{\rho^2 \gamma_{MUE}^{target}} \tag{9}$$

c'est-à-dire que la puissance d'émission estimée de la femtocell FBSn est fixée à une valeur calculée à partir de la mesure de la puissance reçue par la femtocell FBSn d'un signal qui est émis par la station de base du réseau macro-cellulaire qui est considérée comme dominante par la femtocell FBSn.

Selon un premier mode de réalisation de l'étape 4, la puissance d'émission d'une femtocell est égale à la puissance d'émission estimée lors de l'étape 3 et ne peut excéder les valeurs extrêmes de la plage de valeurs de puissance de cette femtocell.

Selon un deuxième mode de réalisation de l'étape 4, une puissance d'émission nulle est attribuée à une femtocell si sa puissance d'émission estimée lors de l'étape 3 est nulle.

Selon un troisième mode de réalisation de l'étape 4, une puissance d'émission nulle est attribuée à une femtocell si sa puissance d'émission estimée lors de l'étape 3 est inférieure à sa puissance d'émission minimale.

Le premier mode de réalisation de l'étape 4 est préconisé dans le cas de l'utilisation d'une politique d'accès restreint dans laquelle une liste CSG indépendante est associée à chaque femtocell, tandis que les deuxième et troisième modes de réalisation de l'étape 4 sont préconisés dans le cas de l'utilisation d'une politique d'accès restreint dans laquelle une liste CSG commune aux femtocells est utilisée.

Selon une variante des deuxième et troisième modes de réalisation, lorsqu'une puissance d'émission nulle est attribuée à une femtocell, qu'un terminal est rattaché à cette femtocell et que le terminal est en cours de communication, une procédure de transfert (hand-over en anglais) est initiée pour que ce terminal se rattache soit à une autre femtocell située à proximité et à laquelle il est autorisé à se rattacher soit à une station de base du réseau macro-cellulaire. Tant que cette procédure n'est pas réussie, la femtocell ne doit pas modifier sa puissance d'émission.

Selon une variante de l'étape 4, si une puissance d'émission nulle est attribuée à une femtocell, cette femtocell éteint sa partie radio mais reste connectée au réseau afin de pouvoir être prise en compte lors d'une nouvelle optimisation des puissances d'émission des femtocells et qu'une puissance d'émission non nulle lui soit attribuée.

L'extinction de la partie radio d'une femtocell est bien évidemment possible que si aucun terminal en cours de communication n'est rattaché à elle.

L'extinction de la partie radio des femtocells permet un déploiement aléatoire de ces dernières dans le réseau macro-cellulaire car dès qu'une femtocell perturbe fortement le fonctionnement du réseau macro-cellulaire, cette femtocell est éteinte et ce sans intervention humaine. De plus le fait d'éteindre de temps en temps la partie radio d'une femtocell apporte une baisse de la consommation de cette dernière.

Selon un mode de réalisation, les étapes du procédé de réduction des interférences sont réalisées périodiquement et/ou lorsque le trafic sur ces femtocells est faible, par exemple la nuit et/ou dès que l'organe central UC détecte qu'une nouvelle femtocell est connectée au réseau ou qu'une femtocell n'est plus connectée au réseau.

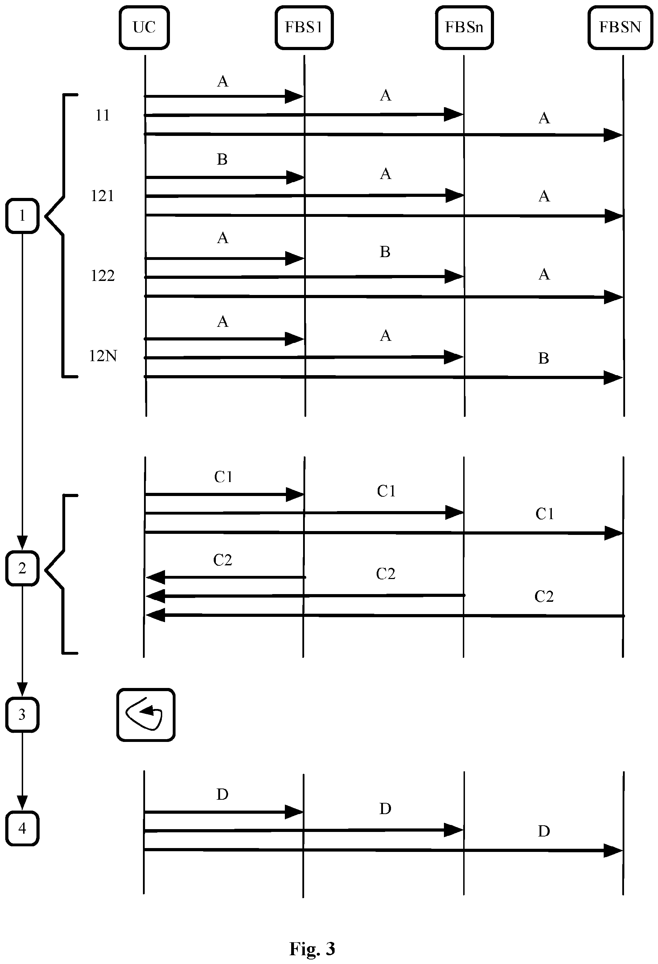

La Fig. 3 représente une illustration d'une mise en oeuvre centralisée du procédé.

L'étape 1 de prise de mesures comporte une sous-étape 11 de prise de mesures communes aux femtocells et $N$ sous-étapes successives 12m de prise de mesures individuelles.

Au cours de la sous-étape 11 de prise de mesures commune aux femtocells, l'organe central UC émet $N$ requêtes A, chacune à destination d'une des $N$ femtocells. Chaque requête A indique à une femtocell FBSn d'effectuer une mesure de type RSRP d'une station de base particulière et/ou une mesure de type RSSI. Lorsqu'elle effectue la (les) mesure(s) demandée(s), la femtocell FBSn n'émet aucun signal sur la bande d'émission commune. Ainsi, lorsque les $N$ requêtes A ont été envoyées par l'organe central UC, aucune femtocell n'émet de signal. Le choix de mesure (RSSI et/ou RSRP) est spécifié dans chaque requête A.

Suite à une mesure de type RSRP du réseau macro-cellulaire par une femtocell FBSn, notée $RSRP_n^0$, la femtocell FBSn obtient la puissance reçue en provenance du réseau macro-cellulaire uniquement, c'est-à-dire une mesure de la puissance reçue d'un signal qui a été émis sur la bande d'émission commune par la station de base du réseau macro-cellulaire considérée dominante par la femtocell FBSn ($P_r^{n,macro}$).

Suite à une mesure de type RSSI par une femtocell FBSn, notée $RSSI_n^0$, la femtocell FBSn obtient la somme de la puissance reçue d'un signal qui a été émis sur la bande d'émission commune par la station de base du réseau macro-cellulaire considérée comme dominante par la femtocell FBSn ($P_r^{n,macro}$) et du bruit thermique environnant la femtocell FBSn ($\sigma_n^2$).

Au cours d'une sous-étape 12m, l'organe central UC émet une requête B à une femtocell FBSm. La requête B indique à la femtocell FBSm d'émettre un signal à sa puissance maximale $P_{max}^m$ et l'organe central UC émet une requête A à chacune des autres (*N*-1) femtocells pour lui indiquer de réaliser des mesures. Ainsi, suite à l'émission d'une requête B et de (*N*-1) requêtes A, une femtocell FBSm émet à sa puissance maximale tandis que chaque autre femtocell FBSn réalise une mesure de type RSRP de la femtocell FBSm, notée $RSRP_n^m$, c'est-à-dire une mesure de la puissance reçue d'un signal qui a été émis par la femtocell FBSm ($RSRP_n^m = \alpha_{n,m} P_{max}^n$) et/ou une mesure de type RSSI, notée $RSSI_n^m$ qui correspond à la somme de la puissance reçue d'un signal émis à puissance maximale par la femtocell FBSm, de la puissance reçue d'un signal qui a été émis par la station de base du réseau macro-cellulaire considérée dominante par la femtocell FBSn ($P_r^{n,macro}$) et du bruit thermique environnant la femtocell FBSn.

Ainsi, à la sous-étape 121 de la Fig. 3, l'organe central UC émet une requête B à la femtocell FSB1 lui indiquant d'émettre un signal à sa puissance maximale et une requête A à chaque autre femtocell FBSn pour lui indiquer de ne pas émettre de signal sur la bande d'émission et de réaliser des mesures. De manière similaire, à la sous-étape 122, l'organe central UC émet une requête B à la femtocell FSB2 lui indiquant d'émettre un signal à sa puissance maximale et une requête A à chaque autre femtocell FBSn pour lui indiquer de ne pas émettre de signal sur la bande d'émission et de réaliser des mesures, etc.

Selon un mode de réalisation de l'étape 1 de prise de mesures, chaque femtocell FBSn réalise au cours de la sous-étape 11 une mesure $RSRP_n^0$ et au cours de chaque sous-étape 12m une mesure $RSRP_n^m$ (excepté à l'étape 12n, où la femtocell FBSn doit émettre à pleine puissance). Ces mesures et leurs relations avec les paramètres utilisés dans la génération des contraintes sont données ci-dessous :

$$\begin{cases} RSRP_n^0 = P_r^{n,macro} \\ \forall m \neq n, \quad RSRP_n^m = \alpha_{n,m} P_{max}^m \end{cases} \qquad (10)$$

Selon un mode de réalisation préféré de l'étape 1 de prise de mesures, chaque femtocell FBSn réalise au cours de la sous-étape 11 une mesure $RSRP_n^0$ et une mesure $RSSI_n^0$ et au cours de chaque sous-étape 12m une mesure $RSSI_n^m$ (excepté à l'étape 12n, où la femtocell FBSn doit émettre à pleine puissance). Ces mesures et leurs liaisons avec les paramètres utilisés dans la génération des contraintes sont données ci-dessous :

$$\begin{cases} RSRP_n^0 = P_r^{n,macro} \\ RSSI_n^0 = P_r^{n,macro} + \sigma_n^2 \\ \forall m \neq n, \quad RSSI_n^m = \alpha_{n,m} P_{max}^m + P_r^{n,macro} + \sigma_n^2 = \alpha_{n,m} P_{max}^m + RSSI_n^0 \end{cases} \qquad (11)$$

Ce mode est avantageux car il est préférable de réaliser une mesure RSRP et *N* mesures RSSI plutôt que *N* mesures RSRP pour diminuer la durée totale de la prise de mesures tout en obtenant les même paramètres utilisés dans la génération des contraintes. En effet, en pratique, une mesure de type RSSI est réalisée beaucoup plus rapidement qu'une mesure RSRP.

Ce mode est également avantageux car l'apparition ou la disparition d'une femtocell dans le réseau a peu d'impact puisque des mesures RSSI sont prises pour mesurer les interférences co-canal dans leur ensemble et non des mesures RSRP qui feraient intervenir individuellement cette femtocell du réseau.

Selon un mode de réalisation de l'étape de prise de mesures, le nombre de mesures à effectuer par une femtocell FBSn est limité à une valeur prédéfinie VA. Dans ce cas, seules sont considérées les mesures des VA femtocells dont les puissances reçues par la femtocell FBSn sont les plus importantes. Les autres mesures non reçues par la femtocell FBSn sont mises à zéro dans le système linéaire.

L'étape 1 de prise de mesures est suivie d'une étape 2 de collecte des mesures par l'organe central UC. A cet effet, l'organe central UC émet une requête à chaque femtocell (référencée C1 sur la Fig. 3) qui lui envoie en réponse les mesures qu'elle a prises (référencées C2 sur la Fig. 3).

L'étape 2 est suivie de l'étape 3 d'optimisation des puissances d'émission des femtocells en fonction des mesures collectées. Cette étape 3 est mise en oeuvre par l'organe central UC tel que illustré sur la Fig. 3 par le rectangle qui englobe la flèche.

Au cours de l'étape 3, l'organe central UC calcule les coefficients d'atténuation $\alpha_{n,m}$ à partir des mesures prises et en utilisant soit l'équation (10) soit l'équation (11) selon le mode de réalisation utilisé. L'organe central UC forme alors le système linéaire suivant à partir de l'équation (8) et des contraintes de l'équation (7) pour chaque femtocell FBSn :

$$\max \quad C^T P \text{ sous la contrainte } AP \le B \qquad\qquad (12)$$

avec $P = \begin{pmatrix} P_t^1 \\ P_t^2 \\ \vdots \\ P_t^N \end{pmatrix}$ le vecteur des puissances d'émission estimée des $N$ femtocells, $C = \begin{pmatrix} c_1 \\ c_2 \\ \vdots \\ c_n \end{pmatrix}$ le vecteur de

coefficients de pondération, $A = \dfrac{1}{\rho^2} \begin{pmatrix} \rho^2 & \alpha_{1,2} & \cdots & \alpha_{1,N} \\ \alpha_{2,1} & \rho^2 & \cdots & \alpha_{2,N} \\ \vdots & \vdots & \ddots & \vdots \\ \alpha_{N,1} & \cdots & \alpha_{N,N-1} & \rho^2 \end{pmatrix}$ une matrice carrée de $N$ lignes et de $N$

colonnes, $B = \dfrac{1}{\rho^2 \gamma_{MUE}^{target}} \begin{pmatrix} P_r^{1,macro} \\ P_r^{2,macro} \\ \vdots \\ P_r^{N,macro} \end{pmatrix}$ le vecteur de contraintes.

On peut noter que le vecteur C n'est composé que de 1 si le système est formé à partir de l'équation (6).

Le problème décrit par l'équation (12) est un problème d'optimisation linéaire dont les inconnues à trouver sont positives (puissances d'émission). L'organe central UC peut alors tenter de résoudre ce système linéaire en utilisant une méthode de résolution, du type la méthode du simplexe, afin d'estimer les $N$ puissances d'émission $\left\{ \hat{P}_t^n \right\}_{1 \le n \le N}$.

Si la méthode de résolution trouve un $N$-uplet solution, la puissance d'émission $P_t^n$ qui va être attribuée à une femtocell FBSn selon le premier mode de réalisation de l'étape 4 respecte les contraintes suivantes :

$$\forall n \in [1, N], \quad P_t^n = \begin{cases} P_{max}^n & \text{si} \quad P_{max}^n < \hat{P}_t^n \\ P_{min}^n & \text{si} \; \hat{P}_t^n < P_{min}^n \\ \hat{P}_t^n & \text{sinon} \end{cases} \quad (13)$$

Si la méthode de résolution trouve un *N*-uplet solution, la puissance d'émission $P_t^n$ qui va être attribuée à une femtocell FBSn selon le deuxième mode de réalisation de l'étape 4 respecte les contraintes suivantes :

$$\forall n \in [1, N], \quad P_t^n = \begin{cases} P_{max}^n & \text{si} \quad P_{max}^n < \hat{P}_t^n \\ \max(\hat{P}_t^n, P_{min}^n) & \text{si} \; 0 < \hat{P}_t^n \le P_{max}^n \\ 0 & \text{si} \; \hat{P}_t^n = 0 \end{cases} \quad (14)$$

Si la méthode de résolution trouve un *N*-uplet solution, la puissance d'émission $P_t^n$ qui va être attribuée à une femtocell FBSn selon le troisième mode de réalisation de l'étape 4 respecte les contraintes suivantes:

$$\forall n \in [1, N], \quad P_t^n = \begin{cases} P_{max}^n & \text{si} \quad P_{max}^n < \hat{P}_t^n \\ \hat{P}_t^n & \text{si} \; P_{min}^n \le \hat{P}_t^n \le P_{max}^n \\ 0 & \text{sinon} \end{cases} \quad (15)$$

Si la méthode de résolution ne trouve pas de *N*-uplet solution, la puissance d'émission $P_t^n$ qui va être attribuée à une femtocell FBSn selon un quatrième mode de réalisation de l'étape 4 respecte les contraintes suivantes:

$$\forall n \in [1, N], \quad P_t^n = P_{max}^n \quad (16)$$

De plus, au cours de cette étape 4, l'organe central UC émet vers chaque femtocell FBSn un signal (référencé D sur la Fig. 3) qui porte la puissance d'émission $P_t^n$ ainsi déterminée.

Une fois ce signal reçu, une femtocell FBSn émet alors à ce nouveau niveau de puissance.

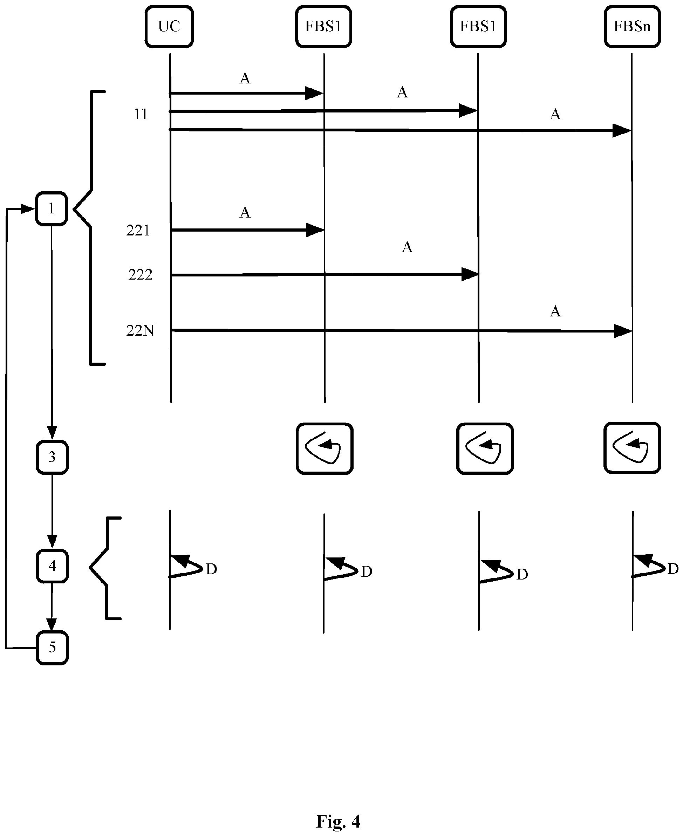

La Fig. 4 représente une illustration d'une mise en oeuvre distribuée du procédé.

Selon cette mise en oeuvre, le procédé est itératif c'est-à-dire que les étapes 1, 3 et 4 sont réalisées à chaque itération *i*. Le procédé s'arrête soit lorsqu'un nombre d'itérations maximal est atteint soit lorsque l'optimisation des puissances d'émission a convergé vers une solution.

L'un des avantages de cette mise en oeuvre est qu'elle ne requiert pas le transfert des mesures prises par une femtocell car l'optimisation de la puissance d'émission d'une femtocell est calculée par cette femtocell à partir des mesures que cette femtocell a prises.

L'étape 1 de prise de mesures comporte la sous-étape 11 de prise de mesures commune aux femtocells qui a été décrite en relation avec la Fig.3 et *N* sous-étapes successives de prise de mesures individuelle 22n.

Au cours d'une sous-étape 22n, l'organe central UC émet une requête (référencée A) à une femtocell FBSn de réaliser des mesures (et donc ne plus émettre). Ainsi, lors de l'émission d'une requête A vers la femtocell FBSn, chaque femtocell FBSm (*m≠n*) continue de fonctionner normalement et émet ses canaux/signaux de référence à la puissance d'émission qui lui a été attribuée à l'itération précédente $P_t^m[i-1]$ tandis que la femtocell FBSn, qui n'émet alors pas, réalise (*N*-1) mesures de type RSRP des autres femtocells FBSm, notées $RSRP_n^m$, c'est-à-dire une mesure de la puissance reçue d'un signal qui a été émis par chaque autre femtocell FBSm ($\alpha_{n,m} P_t^m[i-1]$) et/ou une mesure de type RSSI, notée $RSSI_n^m$ qui correspond à la somme de la puissance reçue des signaux qui ont été émis à la puissance $P_t^m[i-1]$ par les autres femtocells FBSm, de la puissance reçue d'un signal qui a été émis par la station de base du réseau macro-cellulaire considérée dominante par la femtocell FBSn ($P_r^{n,macro}$) et du bruit thermique environnant la femtocell FBSn.

Ainsi, à la sous-étape 221, l'organe central UC émet une requête A à la femtocell FSB1 lui indiquant de réaliser des mesures, à la sous-étape 222, l'organe central UC émet une requête A à la femtocell FSB2 lui indiquant de réaliser des mesures, etc.

Selon un mode de réalisation de l'étape 1 de prise de mesures, chaque femtocell FBSn réalise au cours de la sous-étape 11 une mesure $RSRP_n^0$ et au cours de la sous-étape 22n (*N*-1) mesures $RSRP_n^m$. Au cours des étapes 22m ($m \neq n$), la femtocell FBSn continue de fonctionner normalement. Ces mesures et leurs relations avec les coefficients d'atténuation sont données ci-dessous :

$$\begin{cases} RSRP_n^0 = P_r^{n,macro} \\ \forall m \neq n, \quad RSRP_n^m = \alpha_{n,m} P_t^m[i-1] \end{cases} \tag{17}$$

Selon un mode de réalisation préféré de l'étape 1 de prise de mesures, chaque femtocell FBSn réalise au cours de la sous-étape 11 une mesure $RSRP_n^0$ et une mesure $RSSI_n^0$ et au cours de la sous-étape 22n une mesure $RSSI_n^n$. Au cours des étapes 22m ($m \neq n$), la femtocell FBSn continue de fonctionner normalement. Ces mesures et leurs relations avec les coefficients d'atténuation sont données ci-dessous :

$$\begin{cases} RSRP_n^0 = P_r^{n,macro} \\ RSSI_n^0 = P_r^{n,macro} + \sigma_n^2 \\ RSSI_n^n = \sum_{n \neq m} \alpha_{n,m} P_t^m[i-1] + P_r^{n,macro} + \sigma_n^2 = \sum_{n \neq m} \alpha_{n,m} P_t^m[i-1] + RSSI_n^0 \end{cases} \tag{18}$$

Ce mode est avantageux car il est préférable de réaliser deux mesures RSSI et une mesure RSRP plutôt que *N* mesures RSRP pour diminuer la durée totale de la prise de mesures. En effet, en pratique, une mesure de type RSSI est réalisée beaucoup plus rapidement qu'une mesure RSRP.

Ce mode est également avantageux car l'apparition ou la disparition d'une femtocell dans le réseau a peu d'impact puisque des mesures RSSI sont prises pour mesurer les interférences co-canal dans leur ensemble et non des mesures RSRP qui feraient intervenir individuellement cette femtocell du réseau.

La requête A de l'étape 22n destinée à la femtocell FBSn comporte également un compteur (timer) au bout duquel la femtocell FBSn calculera sa puissance d'émission (étape 3).

L'étape 1 est ainsi suivie de l'étape 3 d'optimisation des puissances d'émission des femtocells en fonction des mesures prises. Cette étape 3 est mise en oeuvre par chaque femtocell FBSn tel que illustré sur la Fig. 4 par des rectangles qui englobent chacun une flèche dès que le compteur associé à la requête A et reçu à l'étape 22n aura atteint une valeur définie.

Selon le mode de réalisation préféré de l'étape 4, chaque femtocell FBSn met à jour sa puissance d'émission en fonction de l'équation suivante (19) déduite de l'équation (8) en considérant que les contraintes de l'équation (7) sont des égalités. Une résolution de ce problème selon l'approche de Jacobi donne à l'itération i pour la femtocell FBSn :

$$\hat{P}_t^n[i] = b_n - \sum_{n \neq m} a_{n,m} P_t^m[i-1]$$
$$= \frac{1}{\rho^2} \left( \frac{RSRP_n^0}{\gamma_{MUE}^{target}} + RSSI_n^0 - RSSI_n^m \right) \tag{19}$$

avec $a_{n,m} = \dfrac{\alpha_{n,m}}{\rho^2}$ et $b_{n,m} = \dfrac{P_r^{n,macro}}{\rho^2 \gamma_{MUE}^{target}}$.

Selon le premier mode de réalisation préféré de l'étape 1, la première égalité de l'équation (19) est utilisée puisque tous les paramètres sont définis grâce à l'équation (17).

Selon le deuxième mode de réalisation préféré de l'étape 1, la deuxième égalité de l'équation (19) est utilisée puisque tous les paramètres sont définis grâce à l'équation (18).

D'autres approches peuvent être utilisées pour déterminer la puissance d'émission d'une femtocell FBSn telle qu'une approche de Gauss-Seidel ou de sur-relaxation successive (SOR). L'expression de la puissance de la femtocell FBSn à l'itération $i$, lorsque ces approches sont utilisées reste globalement la même. Si on considère que les femtocells mettent à jour leur puissance au cours de l'itération $i$ selon l'ordre croissant de leur indice (de 1 à $N$), alors la résolution de ce problème selon l'approche de Gauss-Seidel donne à l'itération i pour la femtocell FBSn :

$$\hat{P}_t^n[i] = b_n - \sum_{m \prec n} a_{n,m} P_t^m[i] - \sum_{n \prec m} a_{n,m} P_t^m[i-1]$$
$$= \frac{1}{\rho^2}\left( \frac{RSRP_n^0}{\gamma_{MUE}^{target}} + RSSI_n^0 - RSSI_n^m \right) \qquad (20)$$

et la résolution de ce problème selon l'approche SOR donne à l'itération $i$ pour la femtocell FBSn

$$\hat{P}_t^n[i] = (1-\omega)P_t^n[i] + \omega\left( b_n - \sum_{m \prec n} a_{n,m} P_t^m[i] - \sum_{n \prec m} a_{n,m} P_t^m[i-1] \right)$$
$$= (1-\omega)P_t^n[i] + \frac{\omega}{\rho^2}\left( \frac{RSRP_n^0}{\gamma_{MUE}^{target}} + RSSI_n^0 - RSSI_n^m \right) \qquad (21)$$

où $\omega$ est le paramètre de sur-relaxation à définir.

Selon la méthode de résolution utilisée, la femtocell FBSn peut soit directement mettre à jour sa puissance d'émission après avoir effectué la requête de l'étape 22n selon l'équation (20) ou (21) (cas de Gauss-Seidel ou SOR), soit attendre que toutes les étapes 22m ($m \neq n$) soient effectuées avant de mettre à jour sa puissance selon l'équation (20) (cas Jacobi). La présence du compteur dans la requête A permet cette attente.

L'organe central UC peut également envoyer une requête de mise à jour autonome de la puissance si aucun compteur (timer) n'est inclus à la requête A de l'étape 22n.

Dans le cas de cette mise en oeuvre distribuée du procédé, la puissance d'émission $P_t^n[i]$ qui va être attribuée pour l'itération suivante $i$ à une femtocell FBSn selon le premier mode de réalisation de l'étape 4 respecte les contraintes suivantes :

$$P_t^n[i] = \begin{cases} P_{max}^n & \text{si} \quad P_{max}^n < \hat{P}_t^n[i] \\ P_{min}^n & \text{si } \hat{P}_t^n[i] < P_{min}^n \\ \hat{P}_t^n[i] & \text{sinon} \end{cases} \qquad (22)$$

Dans le cas de cette mise en oeuvre distribuée du procédé, la puissance d'émission $P_t^n[i]$ qui va être attribuée pour l'itération suivante $i$ à une femtocell FBSn selon le deuxième mode de réalisation de l'étape 4 respecte les contraintes suivantes:

$$P_t^n(i) = \begin{cases} P_{\max}^n & \text{si} \quad P_{\max}^n < \hat{P}_t^n[i] \\ \max(\hat{P}_t^n[i], P_{\min}^n) & \text{si } 0 < \hat{P}_t^n[i] \leq P_{\max}^n \\ 0 & \text{si } \hat{P}_t^n[i] = 0 \end{cases} \qquad (23)$$

Dans le cas de cette mise en oeuvre distribuée du procédé, la puissance d'émission $P_t^n[i]$ qui va être attribuée pour l'itération suivante *i* à une femtocell FBSn selon le troisième mode de réalisation de l'étape 4 respecte les contraintes suivantes:

$$P_t^n[i] = \begin{cases} P_{\max}^n & \text{si} \quad P_{\max}^n < \hat{P}_t^n[i] \\ \hat{P}_t^n[i] & \text{si } P_{\min}^n \leq \hat{P}_t^n[i] \leq P_{\max}^n \\ 0 & \text{sinon} \end{cases} \qquad (24)$$

Selon un mode de réalisation, la puissance d'émission d'une femtocell FBSn est initialisée à $P_t^n[0] = \dfrac{P_r^{n,macro}}{\rho^2 \gamma_{MUE}^{target}}$ .

De plus, selon cette mise en oeuvre distribuée du procédé, au cours de cette étape 4, la valeur de puissance $P_t^n[i]$ ainsi déterminée par cette femtocell est utilisée par cette femtocell pour émettre des signaux (référence D sur la Fig. 4).

L'organe central UC et chaque femtocell communiquent entre eux des informations portées par le signal Si. Par l'intermédiaire de ce signal Si, l'organe central UC ordonne que des mesures soient réalisées par les femtocells (requête A) ou qu'une femtocell émette sa puissance maximale (requête B) et transmet les puissances auxquelles doivent émettre les femtocells (requête D), et les femtocells transmettent à l'organe central UC les résultats des mesures qu'elles ont réalisées et leurs plages de valeurs de puissance (réponse C2 suite à une requête C1). Ces échanges entre les femtocells et l'organe central UC sont ordonnés temporellement selon le procédé décrit en relation avec les Fig. 3 et 4 dont la mise en oeuvre utilise un protocole de communication utilisant une interface logique reposant sur une interface physique pouvant être filaire ou non-filaire.

La trame du signal Si comporte, entre autres, un identifiant ID et une commande CMD lorsque ce signal est une requête R émise par l'organe central UC à destination d'une femtocell et une information INFO lorsque ce signal est une réponse RE d'une femtocell à destination de l'organe central UC tel que illustré à la Fig. 5a. On peut noter qu'une réponse RE est toujours relative à une requête précédemment émise. Cette requête est identifiée par un identifiant qui est ici noté R.ID pour indiquer que l'information INFO de la réponse RE fait référence à une requête précédente R qui a été reçue par une femtocell particulière. De plus, si l'information INFO est relative à plusieurs requêtes précédentes, chaque information est relative à l'identifiant de la requête à laquelle cette information correspond.

Cet identifiant R.ID permet à l'organe central UC de discriminer les réponses lorsque la femtocell intègre cet identifiant R.ID dans sa réponse et que l'organe central UC garde une trace de ses requêtes. L'identifiant ID d'une requête permet à une femtocell de savoir quel est le comportement qu'elle doit adopter suite à la réception de cette requête. La commande CMD et l'information INFO sont accompagnées ou pas de paramètre PA.

La Fig. 5b illustre des modes de réalisation des trames du signal Si qui sont utilisées pour construire les requêtes A, B, C1 et D et la réponse C2 et du procédé décrit en relation avec les Figs. 3 et 4.

La requête REQ1 comporte un identifiant propre et la commande CMD1 qui demande à la femtocell qui reçoit cette requête de réaliser une mesure de type RSSI. La requête REQ1 est équivalente à une requête A.

La requête REQ2 comporte un identifiant spécifique propre et la commande CMD2 qui demande à la femtocell qui reçoit cette requête de réaliser une mesure de type RSRP. Cette commande CMD2 est associée à au moins un paramètre qui indique sur laquelle ou lesquelles des stations de base MBS et/ou femtocells FBSn doit porter cette mesure. La requête REQ2 est équivalente à une requête A.

La requête REQ3 comporte un identifiant propre et la commande CMD3 qui demande à la femtocell FBSn qui reçoit cette requête de réaliser une mesure de type RSSI et une mesure de type RSRP de la station de base macro-cellulaire considérée comme dominante par la femtocell FBSn. La requête REQ3 est équivalente à une requête A.

La requête REQ4 comporte un identifiant propre et la commande CMD4 qui demande à la femtocell qui reçoit cette requête de renvoyer tous les résultats de mesures obtenus lors de précédentes réceptions de commandes CMD1, CMD2 ou CMD3 ainsi que sa plage de puissance d'émission. Selon un mode de réalisation, les résultats de mesures, une fois émis, sont effacés de la femtocell. De plus, si la femtocell reçoit une commande CMD4 alors qu'elle n'a pas de résultats de mesures à émettre, elle n'émet rien. La requête REQ4 est équivalente à une requête C1.

La requête REQ5 comporte un identifiant propre et la commande CMD5 qui demande à la femtocell qui reçoit cette requête d'émettre à une puissance donnée en paramètre. La requête REQ5 est équivalente à une requête D.

La requête REQ6 comporte un identifiant propre et la commande CMD6 qui demande à la femtocell qui reçoit cette requête d'émettre à sa puissance maximale. La requête REQ6 est équivalente à une requête B.

La réponse AN comporte l'identifiant REQ4.ID de la précédente requête qui a déclenché cette réponse AN, c'est-à-dire l'identifiant de la requête à l'origine de la génération d'une trame qui porte cette réponse, ainsi que les paramètres correspondant aux informations demandées par cette requête (équivalente d'une réponse C1). L'information INFO comporte un ou plusieurs identifiants REQ1.ID qui permettent à l'organe central UC de savoir à quelles requêtes REQ1 sont associées les mesures de type RSSI qui suivent, et/ou un ou plusieurs identifiants REQ2.ID qui permettent à l'organe central UC de savoir à quelles requêtes REQ2 sont associées les mesures de type RSRP qui suivent, et/ou un ou plusieurs identifiants REQ3.ID qui permettent à l'organe central UC de savoir à quelles requêtes REQ3 sont associées les mesures de type RSSI et RSRP qui suivent, et la plage de valeurs de puissance de la femtocell FBSn. L'association de l'identifiant de la requête REQ1, REQ2 ou REQ3 dans l'information INFO permet à la femtocell de ne pas avoir à envoyer pour chaque mesure l'identité de la station de base/femtocell cible de la mesure, l'organe central UC faisant la correspondance grâce aux identifiants.

Selon un mode de réalisation, ce protocole de communication se fait par le biais du protocole TR-069, protocole définissant les communications entre un équipement déployé chez un client (*Customer Premise Equipment* en anglais), tel une femtocell, et un serveur de configuration automatique (*Automatic Configuration Server* en anglais). Ce protocole, défini par le Broadband Forum dans le rapport technique « *TR-069 Amendment 3 ; CPE WAN Management Protocol »,  Issue 1, November 2010*, permet une gestion générique à distance des équipements. Le protocole TR-069 autorise également l'ajout de paramètres spécifiques à un constructeur (*Vendor Specific* en anglais) provoquant alors un comportement bien déterminé lors de leur réception par l'équipement et/ou le serveur de configuration automatique. Ainsi il est possible d'ajouter les requêtes/réponses définies précédemment au protocole TR-069 et de programmer la femtocell/le serveur de configuration automatique pour obtenir le comportement désiré lors de la réception de ces messages spécifiques.

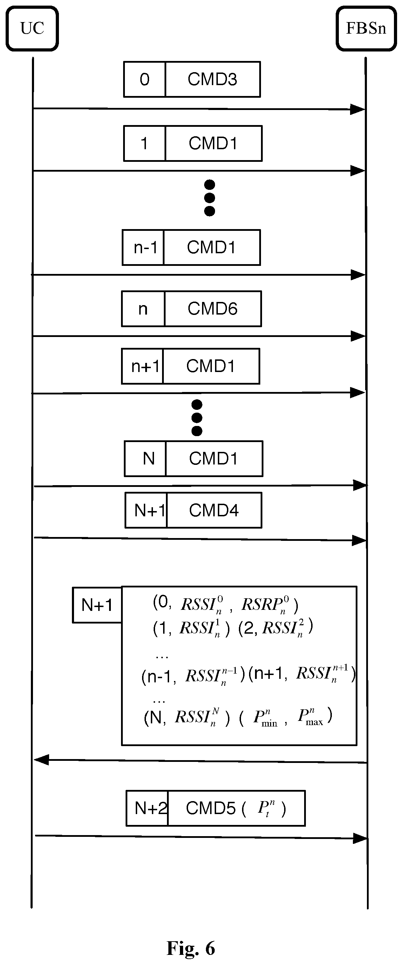

La Fig. 6 représente un exemple de mise en oeuvre centralisée du mode préféré de réalisation du procédé décrit en relation avec la Fig. 3 lorsque le signal Si utilise des trames décrites en relation avec les Figs. 5a et 5b.

L'organe central émet une requête REQ3 à destination de la femtocell FBSn qui réalise alors une mesure $RSRP_n^0$ et une mesure $RSSI_n^0$ (étape 11).

L'organe central UC émet (*N*-1) requêtes REQ1 à la femtocell FBSn pour qu'elle réalise (*N*-1) mesures $RSSI_n^m$ (étapes 12m). A chaque requête REQ1, l'organe central émet dans le même temps une requête REQ6 à destination de la femtocell FBSm (non représentée sur la Fig. 6).

L'organe central UC émet également une requête REQ6 à destination de la femtocell FBSn afin que les autres femtocells FBSm puissent effectuer leurs mesures $RSSI_m^n$ (étape 12n) en réponse à une requête REQ1 (non représentée sur la Fig. 6).

L'organe central UC émet ensuite une requête REQ4 pour demander à la femtocell FBSn de lui envoyer les résultats de mesures qu'elle a réalisées (étape 2).

La femtocell émet alors une réponse AN qui comporte la mesure $RSRP_n^0$, la mesure $RSSI_n^0$ et les (*N*-1) mesures $RSSI_n^m$ qu'elle vient de réaliser ainsi que sa plage de valeurs de puissance.

L'organe central UC calcule alors, entre autres, la puissance d'émission de la femtocell FBSn (étape 3) et envoie une requête REQ5 qui indique à la femtocell FBSn la puissance à laquelle elle doit dorénavant émettre (étape 4).

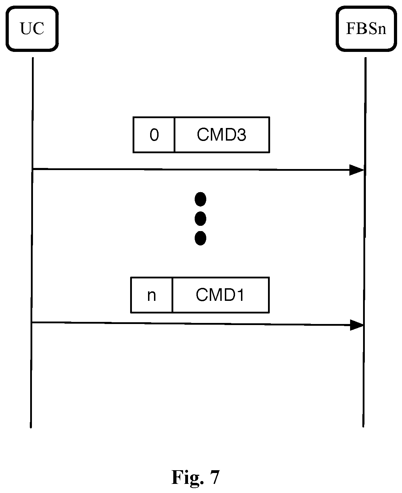

La Fig. 7 représente un exemple de mise en oeuvre distribuée du mode préféré de réalisation du procédé décrit en relation avec la Fig. 4 lorsque le signal Si utilise des trames décrites en relation avec les Figs. 5a et 5b.

L'organe central UC émet une requête REQ3 à destination de la femtocell FBSn qui réalise alors une mesure $RSRP_n^0$ et une mesure $RSSI_n^0$ (étape 11).

L'organe central UC émet ensuite une requête REQ1 à la femtocell FBSn pour qu'elle réalise une mesure

$RSSI^n_n$ (étape 22n). Cette requête est associée à un compteur (timer) qui indique à la femtocell FBSn quand calculer sa nouvelle puissance d'émission.

Une fois la valeur cible atteinte par le compteur, la femtocell FBSn calcule alors sa puissance d'émission (étape 3) et met à jour sa puissance à laquelle elle va dorénavant émettre.

**Revendications**

1. Procédé de réduction des interférences co-canal dues au déploiement de *N* femtocells dans un réseau macro-cellulaire, *N* étant un nombre entier, ledit procédé comportant une étape (1) de prise de mesures de puissance de signaux émis sur ce réseau au cours de laquelle les mesures de puissance sont uniquement prises par les *N* femtocells et ces mesures sont ordonnées temporellement par un organe central UC du système, une étape (3) d'optimisation des puissances d'émission des femtocells en fonction de ces mesures, et une étape (4) d'attribution à chaque femtocell de sa puissance d'émission,
le procédé étant tel qu'au cours de l'étape (3) d'optimisation, les puissances d'émission des femtocells sont maximisées sous la contrainte de maintien d'une qualité de service minimale de terminaux qui seraient rattachés aux stations de base du réseau macro-cellulaire
**caractérisé en ce que** le procédé est tel qu'au cours de l'étape (3) d'optimisation, la fonction de coût suivante est maximisée :

$$\max_{P_t^n} \quad c = \sum_{n=1}^{N} c_n * P_t^n$$

sous la contrainte

$$\forall n \in \{1, N\}, \quad P_t^n + \sum_{m \neq n} \frac{\alpha_{n,m}}{\rho^2} P_t^m \leq \frac{P_r^{n,macro}}{\rho^2 \gamma_{MUE}^{target}} - \sigma_n^2 \leq \frac{P_r^{n,macro}}{\rho^2 \gamma_{MUE}^{target}}$$

où $P_t^n$ est la puissance d'émission d'une femtocell, dite FBSn, $P_t^m$ est la puissance d'émission d'une femtocell, dite FBSm, $c_n$ est un coefficient de pondération associé à la puissance d'émission de la femtocell FBSn, $\alpha_{n,m}$ est le coefficient d'atténuation dû au canal séparant la femtocell FBSm de la femtocell FBSn, $P_r^{n,macro}$ est la puissance reçue par la femtocell FBSn d'un signal qui a été émis par la station de base du réseau macro-cellulaire considérée comme dominante par la femtocell FBSn, $\sigma_n^2$ est la puissance du bruit thermique environnant perçu par la femtocell FBSn, $\rho$ un coefficient qui traduit la couverture de la femtocell FBSn au-delà de laquelle un terminal qui serait rattaché à une station de base du réseau macro-cellulaire verrait un rapport signal à interférence-plus-bruit supérieur à une valeur seuil $\gamma_{MUE}^{target}$.

2. Procédé selon la revendication 1, dans lequel au cours de l'étape d'attribution, la puissance d'émission d'une femtocell estimée au cours de l'étape (3) d'optimisation est limitée aux valeurs extrêmes d'une plage de valeurs de puissance de cette femtocell.

3. Procédé selon la revendication 1, dans lequel au cours de l'étape d'attribution, une puissance d'émission nulle est attribuée à une femtocell si sa puissance d'émission estimée au cour de l'étape (3) d'optimisation est nulle.

4. Procédé selon la revendication 1, dans lequel au cours de l'étape d'attribution, une puissance d'émission nulle est attribuée à une femtocell si sa puissance d'émission estimée est inférieure à une puissance d'émission minimale.

5. Procédé selon l'une des revendications 3 ou 4, dans lequel lorsqu'une puissance d'émission nulle est attribuée à une femtocell, qu'un terminal est rattaché à cette femtocell et que le terminal est en cours de communication, une procédure de transfert est initiée pour que ce terminal se rattache soit à une autre femtocell située à proximité et à laquelle il est autorisé à se rattacher soit à une station de base du réseau macro-cellulaire.

6. Procédé selon l'une des revendications 3 à 5, dans lequel cette femtocell éteint sa partie radio mais reste connectée au réseau afin de pouvoir être prise en compte lors d'une nouvelle optimisation des puissances d'émissions des femtocells et qu'une puissance d'émission non nulle lui soit attribuée.

7. Procédé selon l'une des revendications précédentes, dans lequel les étapes du procédé sont réalisées périodiquement et/ou lorsque le trafic sur ces femtocells est faible et/ou dès que l'organe central UC détecte qu'une nouvelle femtocell est connectée au réseau ou qu'une femtocell n'est plus connectée au réseau.

8. Procédé selon l'une des revendications 1 à 7, dans lequel l'étape (1) de prise de mesures comporte une sous-étape (11) de prise de mesures communes aux femtocells et N sous-étapes (12m, 22n) successives de prise de mesures individuelles.

9. Procédé selon la revendication 8, qui comporte une étape (2) de collecte des mesures par l'organe central UC suivie de l'étape (3) d'optimisation qui est mise en oeuvre par cet organe central UC suivie de l'étape (4) d'attribution au cours de laquelle l'organe central UC émet vers chaque femtocell un signal qui porte la puissance d'émission de cette femtocell.

10. Procédé selon la revendication 9, dans lequel au cours de la sous-étape (11) de prise de mesures communes, aucune femtocell n'émet de signal et chaque femtocell, dite FBSn, réalise une mesure de type RSRP de la puissance reçue d'un signal qui a été émis par la station de base du réseau macro-cellulaire considérée dominante par la femtocell FBSn ($P_r^{n,macro}$), et/ou une mesure de type RSSI de la somme de la puissance reçue d'un signal qui a été émis sur la bande d'émission commune par la station de base du réseau macro-cellulaire considérée comme dominante par la femtocell FBSn (*CPICH* ($P_r^{n,macro}$), et du bruit thermique environnant la femtocell FBSn ($\sigma_n^2$), et au cours de chaque sous-étape (12m) de prise de mesures individuelles, une femtocell, dite FBSm, émet un signal à sa puissance maximale ($P_{max}^m$) et chacune des autres (*N*-1) femtocells, dite FBSn, réalise alors une mesure de type RSRP de la puissance reçue d'un signal qui a été émis par la femtocell FBSm ($\alpha_{n,m}P_{max}^n$) et/ou une mesure de type RSSI qui correspond à la somme de la puissance reçue d'un signal émis à puissance maximale par la femtocell FBSm, de la puissance reçue d'un signal qui a été émis par la station de base du réseau macro-cellulaire considérée dominante par la femtocell FBSn ($P_r^{n,macro}$) et du bruit thermique environnant la femtocell FBSn.

11. Procédé selon la revendication 10, dans lequel au cours de la sous-étape (11) de prise de mesures communes, chaque femtocell FBSn réalise une mesure de type RSRP de la puissance reçue d'un signal qui a été émis par la station de base du réseau macro-cellulaire considérée dominante par cette femtocell ($P_r^{n,macro}$), et au cours de chaque sous-étape (12m) de prise de mesures individuelles, chacune des autres (*N*-1) femtocells FBSn réalise alors une mesure de type RSRP de la puissance reçue d'un signal qui a été émis par la femtocell FBSm ($\alpha_{n,m}P_{max}^n$).

12. Procédé selon la revendication 10, dans lequel au cours de la sous-étape (11) de prise de mesures communes, chaque femtocell FBSn réalise une mesure de type RSRP de la puissance reçue d'un signal qui a été émis par la station de base du réseau macro-cellulaire considérée dominante par cette femtocell ($P_r^{n,macro}$) et une mesure de type RSSI de la somme de la puissance reçue d'un signal qui a été émis sur la bande d'émission commune par la station de base du réseau macro-cellulaire considérée comme dominante par la femtocell FBSn ($P_r^{n,macro}$), et du bruit thermique environnant la femtocell FBSn ($\sigma_n^2$), et au cours de chaque sous-étape (12m) de prise de mesures individuelles, chacune des autres (*N*-1) femtocells FBSn réalise une mesure de type RSSI qui correspond à la somme de la puissance reçue d'un signal émis à puissance maximale par la femtocell FBSm, de la puissance reçue d'un signal qui a été émis par la station de base du réseau macro-cellulaire considérée dominante par la femtocell FBSn ($P_r^{n,macro}$) et du bruit thermique environnant la femtocell FBSn.

13. Procédé selon la revendication 8, l'étape (1) de prise de mesures, l'étape (3) d'optimisation qui est mise en oeuvre par chaque femtocell, l'étape (4) d'attribution au cours de laquelle la femtocell remplace sa puissance d'émission actuelle par la puissance d'émission ainsi optimisée, sont itérées.

14. Procédé selon la revendication 13, dans lequel au cours de la sous-étape (11) de prise de mesures communes, aucune femtocell n'émet de signal et chaque femtocell, dite FBSn, réalise une mesure de type RSRP de la puissance reçue d'un signal qui a été émis par la station de base du réseau macro-cellulaire considérée dominante par la femtocell FBSn ($P_r^{n,macro}$), et/ou une mesure de type RSSI de la somme de la puissance reçue d'un signal qui a été émis sur la bande d'émission commune par la station de base du réseau macro-cellulaire considérée comme dominante par la femtocell FBSn ($P_r^{n,macro}$), et du bruit thermique environnant la femtocell FBSn ($\sigma_n^2$), et au cours de chaque sous-étape (22n) de prise de mesures individuelles, toutes les femtocells émettent un signal à la puissance d'émission qui lui a été attribuée à l'itération précédente, et une femtocell, dite FBSn, n'émet alors pas de signal et réalise (N-1) mesures de type RSRP de la puissance reçue d'un signal qui a été émis par chaque autre femtocell ($\alpha_{n,m}P_t^m[i-1]$) et/ou une mesure de type RSSI qui correspond à la somme de la puissance reçue des signaux qui ont été émis par les autres femtocells FBSm, de la puissance reçue d'un signal qui a été émis par la station de base du réseau macro-cellulaire considérée dominante par la femtocell FBSn ($P_r^{n,macro}$) et du bruit thermique environnant la femtocell FBSn.

**15.** Procédé selon la revendication 14, dans lequel au cours de la sous-étape (11) de prise de mesures communes, chaque femtocell FBSn réalise une mesure de type RSRP de la puissance reçue d'un signal qui a été émis par la station de base du réseau macro-cellulaire considérée dominante par cette femtocell ($P_r^{n,macro}$), et au cours de la sous-étape (22n) de prise de mesures individuelles, la femtocell FBSn réalise (N-1) mesures de type RSRP de la puissance reçue d'un signal qui a été émis par chaque autre femtocell ($\alpha_{n,m}P_t^m[i-1]$).

**16.** Procédé selon la revendication 14, dans lequel au cours de la sous-étape (11) de prise de mesures communes, chaque femtocell FBSn réalise une mesure de type RSRP de la puissance reçue d'un signal qui a été émis par la station de base du réseau macro-cellulaire considérée dominante par cette femtocell ($P_r^{n,macro}$), et une mesure de type RSSI de la somme de la puissance reçue d'un signal qui a été émis sur la bande d'émission commune par la station de base du réseau macro-cellulaire considérée comme dominante par la femtocell FBSn ($P_r^{n,macro}$), et du bruit thermique environnant la femtocell FBSn ($\sigma_n^2$), et au cours de la sous-étape (22n) de prise de mesures individuelles, la femtocell FBSn réalise une mesure de type RSSI qui correspond à la somme de la puissance reçue des signaux qui ont été émis par les autres femtocells FBSm, de la puissance reçue d'un signal qui a été émis par la station de base du réseau macro-cellulaire considérée dominante par la femtocell FBSn ($P_r^{n,macro}$) et du bruit thermique environnant la femtocell FBSn.

**17.** Système de réduction des interférences co-canal dues au déploiement de N femtocells dans un réseau macro-cellulaire, N étant un nombre entier, ledit système comportant des moyens de prise de mesures de puissance de signaux émis sur ce réseau de sorte que les mesures de puissance sont uniquement prises par les N femtocells et ces mesures sont ordonnées temporellement par un organe central UC du système, des moyens d'optimisation des puissances d'émission des femtocells en fonction de ces mesures, et des moyens d'attribution à chaque femtocell de sa puissance d'émission,
le système étant adapté pour, qu'au cours de l'optimisation par lesdits moyens d'optimisation, les puissances d'émission des femtocells sont maximisées sous la contrainte de maintien d'une qualité de service minimale de terminaux qui seraient rattachés aux stations de base du réseau macro-cellulaire,
caractérisé en ce le système est adapté pour, qu'au cours de l'optimisation, la fonction de coût suivante est maximisée :

$$\max_{P_t^n} \quad c = \sum_{n=1}^{N} c_n * P_t^n$$

sous la contrainte

$$\forall n \in \{1, N\}, \quad P_t^n + \sum_{m \neq n} \frac{\alpha_{n,m}}{\rho^2} P_t^m \leq \frac{P_r^{n,macro}}{\rho^2 \gamma_{MUE}^{target}} - \sigma_n^2 \leq \frac{P_r^{n,macro}}{\rho^2 \gamma_{MUE}^{target}}$$

où $P_t^n$ est la puissance d'émission d'une femtocell, dite FBSn, $P_t^m$ est la puissance d'émission d'une femtocell, dite FBSm, c_n est un coefficient de pondération associé à la puissance d'émission de la femtocell FBSn, $\alpha_{n,m}$ est le coefficient d'atténuation dû au canal séparant la femtocell FBSm de la femtocell FBSn, $P_r^{n,macro}$ est la puissance reçue par la femtocell FBSn d'un signal qui a été émis par la station de base du réseau macro-cellulaire considérée comme dominante par la femtocell FBSn, $\sigma_n^2$ est la puissance du bruit thermique environnant perçu par la femtocell FBSn, $\rho$ un coefficient qui traduit la couverture de la femtocell FBSn au-delà de laquelle un terminal qui serait rattaché à une station de base du réseau macro-cellulaire verrait un rapport signal à interférence-plus-bruit supérieur à une valeur seuil $\gamma_{MUE}^{\text{target}}$.

**18.** Système selon la revendication 17, dans lequel chaque femtocell est également prévue pour optimiser sa puissance d'émission selon des mesures qu'elle a prise.

**19.** Système selon la revendication 17, dans lequel l'organe central UC comporte également des moyens pour collecter les mesures prises par les femtocells, pour optimiser leur puissance d'émission et pour envoyer à ces femtocells leur puissance d'émission ainsi optimisées.

**Patentansprüche**

**1.** Verfahren zur Reduzierung der Gleichkanalinterferenzen aufgrund der Ausbreitung von N Femtozellen in einem makrozellularen Netz, wobei N eine ganze Zahl ist, wobei das Verfahren einen Schritt (1) der Durchführung von Leistungsmessungen von über dieses Netz gesendeten Signalen, während dessen die Leistungsmessungen nur von den N Femtozellen durchgeführt werden, und diese Messungen zeitlich von einem Zentralorgan UC des Systems geordnet werden, einen Schritt (3) der Optimierung der Sendeleistungen der Femtozellen abhängig von diesen Messungen, und einen Schritt (4) der Zuweisung ihrer Sendeleistung zu jeder Femtozelle aufweist, wobei das Verfahren so ist, dass während des Optimierungsschritts (3) die Sendeleistungen der Femtozellen unter der Bedingung der Aufrechterhaltung einer minimalen Dienstqualität von Endgeräten maximiert werden, die an die Basisstationen des makrozellularen Netzes angeschlossen wären,
**dadurch gekennzeichnet, dass** das Verfahren so ist, dass während des Optimierungsschritts (3) die folgende Kostenfunktion maximiert wird:

$$\max_{P_t^e} \quad c = \sum_{n=1}^{N} c_n * P_t^n$$

unter der Bedingung

$$\forall n \in \{1, N\}, \quad P_t^n + \sum_{m \neq n} \frac{a_{n,m}}{\rho^2} P_t^m \leq \frac{P_r^{n,macro}}{\rho^2 \gamma_{MUE}^{target}} - \sigma_n^2 \leq \frac{P_r^{n,macro}}{\rho^2 \gamma_{MUE}^{target}}$$

wobei $P_t^n$ die Sendeleistung einer Femtozelle, FBSn genannt, $P_t^m$ die Sendeleistung einer Femtozelle, FBSm genannt, c_n ein der Sendeleistung der Femtozelle FBSn zugeordneter Gewichtungskoeffizient, $\alpha_{n,m}$ der Dämpfungskoeffizient aufgrund des die Femtozelle FBSm von der Femtozelle FBSn trennenden Kanals, $P_r^{n,macro}$ die von der Femtozelle FBSn empfangene Leistung eines Signals, das von der Basisstation des makrozellularen Netzes gesendet wurde, die von der Femtozelle FBSn als dominant angesehen wird, $\sigma_n^2$ die Leistung des umgebenden thermischen Rauschens ist, das von der Femtozelle FBSn wahrgenommen wird, $\rho$ ein Koeffizient ist, der die Versorgung der Femtozelle FBSn ausdrückt, jenseits von der ein Endgerät, das an eine Basisstation des makrozellularen Netzes angeschlossen wäre, ein Signalverhältnis mit Interferenz-plus-Rauschen höher als ein Schwellwert $\gamma_{MUE}^{target}$ feststellen würde.

**2.** Verfahren nach Anspruch 1, wobei während des Zuteilungsschritts die geschätzte Sendeleistung einer Femtozelle während des Optimierungsschritts (3) auf die Endwerte eines Leistungswertebereichs dieser Femtozelle begrenzt ist.

**3.** Verfahren nach Anspruch 1, wobei während des Zuteilungsschritts eine Sendeleistung Null einer Femtozelle zugeteilt wird, wenn ihre geschätzte Sendeleistung während des Optimierungsschritts (3) Null ist.

**4.** Verfahren nach Anspruch 1, wobei während des Zuteilungsschritts eine Sendeleistung Null einer Femtozelle zugeteilt wird, wenn ihre geschätzte Sendeleistung niedriger als eine minimale Sendeleistung ist.

**5.** Verfahren nach einem der Ansprüche 3 oder 4, wobei, wenn eine Sendeleistung Null einer Femtozelle zugeteilt wird, wenn ein Endgerät an diese Femtozelle angeschlossen ist und wenn das Endgerät gerade in Verbindung steht, eine Transferprozedur initiiert wird, damit dieses Endgerät sich entweder an eine andere Femtozelle, die sich in der Nähe befindet und an die es sich anschließen darf, oder an eine Basisstation des makrozellularen Netzes anschließt.

**6.** Verfahren nach einem der Ansprüche 3 bis 5, wobei diese Femtozelle ihren Funkteil ausschaltet, aber mit dem Netz verbunden bleibt, um bei einer neuen Optimierung der Sendeleistungen der Femtozellen berücksichtigt werden zu können, und ihr eine Sendeleistung ungleich Null zugeteilt wird.

**7.** Verfahren nach einem der vorhergehenden Ansprüche, wobei die Schritte des Verfahrens periodisch und/oder wenn der Verkehr auf diesen Femtozellen schwach ist und/oder sobald das zentrale Organ UC erfasst, dass eine neue Femtozelle mit dem Netz verbunden ist oder dass eine Femtozelle nicht mehr mit dem Netz verbunden ist, durchgeführt werden.

**8.** Verfahren nach einem der Ansprüche 1 bis 7, wobei der Schritt (1) der Durchführung von Messungen einen Teilschritt (11) der Durchführung von den Femtozellen gemeinsamen Messungen und N aufeinanderfolgende Teilschritte (12m, 22n) der Durchführung einzelner Messungen aufweist.

**9.** Verfahren nach Anspruch 8, das einen Schritt (2) des Sammelns der Messungen durch das zentrale Organ UC gefolgt vom Optimierungsschritt (3) aufweist, der von diesem zentralen Organ UC angewendet wird, gefolgt vom Schritt (4) der Zuteilung, während dessen das zentrale Organ UC zu jeder Femtozelle ein Signal sendet, das die Sendeleistung dieser Femtozelle trägt.

**10.** Verfahren nach Anspruch 9, wobei während des Teilschritts (11) der Durchführung gemeinsamer Messungen keine Femtozelle ein Signal sendet und jede Femtozelle, FBSn genannt, eine Messung der Art RSRP von der empfangenen Leistung eines Signals, das von der Basisstation des makrozellularen Netzes gesendet wurde, die von der Femtozelle FBSn $( P_r^{n,macro} )$ als dominant angesehen wird, und/oder eine Messung der Art RSSI der Summe der empfangenen Leistung eines Signals, das auf dem gemeinsamen Sendeband von der Basisstation des makrozellularen Netzes gesendet wurde, die von der Femtozelle FBSn $( P_r^{n,macro} )$ als dominant angesehen wird, und des die Femtozelle FBSn $( \sigma_n^2 )$ umgebenden thermischen Rauschens ausführt, und während jedes Teilschritts (12m) der Durchführung einzelner Messungen eine Femtozelle, FBSm genannt, ein Signal auf seiner maximalen Leistung $( P_{max}^m )$ sendet, und jede der anderen (N-1) Femtozellen, FBSn genannt, dann eine Messung der Art RSRP der empfangenen Leistung eines Signals, das von der Femtozelle FBSm $( \alpha_{n,m} P_{max}^n )$ gesendet wurde, und/oder eine Messung der Art RSSI ausführt, die der Summe der empfangenen Leistung eines Signals, das auf maximaler Leistung von der Femtozelle FBSm gesendet wurde, der empfangenen Leistung eines Signals, das von der Basisstation des makrozellularen Netzes gesendet wurde, die von der Femtozelle FBSn $( P_r^{n,macro} )$ als dominant angesehen wurde, und des die Femtozelle FBSn umgebenden thermischen Rauschens entspricht.

**11.** Verfahren nach Anspruch 10, wobei während des Teilschritts (11) der Durchführung gemeinsamer Messungen jede Femtozelle FBSn eine Messung der Art RSRP der empfangenen Leistung eines Signals durchführt, das von der Basisstation des makrozellularen Netzes gesendet wurde, die von dieser Femtozelle $( P_r^{n,macro} )$ als dominant angesehen wird, und während jedes Teilschritts (12m) der Durchführung einzelner Messungen jede der anderen (N-1) Femtozellen FBSn dann eine Messung der Art RSRP der empfangenen Leistung eines Signals ausführt, das von der Femtozelle FBSm $(\alpha_{n,m} P_{max}^{n})$ gesendet wurde.

**12.** Verfahren nach Anspruch 10, wobei während des Teilschritts (11) der Durchführung gemeinsamer Messungen jede Femtozelle FBSn eine Messung der Art RSRP der empfangenen Leistung eines Signals, das von der Basisstation des makrozellularen Netzes gesendet wurde, die von dieser Femtozelle $(P_r^{n,macro})$ als dominant angesehen wird, und eine Messung der Art RSSI der Summe der empfangenen Leistung eines Signals, das auf dem gemeinsamen Sendeband von der Basisstation des makrozellularen Netzes gesendet wurde, die von der Femtozelle FBSn $(P_r^{n,macro})$ als dominant angesehen wird, und des die Femtozelle FBSn $(\sigma_n^2)$ umgebenden thermischen Rauschens ausführt, und während jedes Teilschritts (12m) der Durchführung einzelner Messungen jede der anderen (N-1) Femtozellen FBSn eine Messung der Art RSSI ausführt, die der Summe der empfangenen Leistung eines Signals, das mit maximaler Leistung von der Femtozelle FBSm gesendet wurde, der empfangenen Leistung eines Signals, das von der Basisstation des makrozellularen Netzes gesendet wurde, die von der Femtozelle FBSn $(P_r^{n,macro})$ als dominant angesehen wird, und des die Femtozelle FBSn umgebenden thermischen Rauschens entspricht.

**13.** Verfahren nach Anspruch 8, wobei der Schritt (1) der Durchführung von Messungen, der Optimierungsschritt (3), der von jeder Femtozelle ausgeführt wird, der Zuteilungsschritt (4), während dessen jede Femtozelle ihre aktuelle Sendeleistung durch die so optimierte Sendeleistung ersetzt, wiederholt werden.

**14.** Verfahren nach Anspruch 13, wobei während des Teilschritts (11) der Durchführung gemeinsamer Messungen keine Femtozelle ein Signal sendet, und jede Femtozelle, FBSn genannt, eine Messung der Art RSRP der empfangenen Leistung eines Signals, das von der Basisstation des makrozellularen Netzes gesendet wurde, die von der Femtozelle FBSn $(P_r^{n,macro})$ als dominant angesehen wird, und/oder eine Messung der Art RSSI der Summe der empfangenen Leistung eines Signals, das auf dem gemeinsamen Leistungsband von der Basisstation des makrozellulare Netzes gesendet wurde, die von der Femtozelle FBSn $(P_r^{n,macro})$ als dominant angesehen wird, und des die Femtozelle FBSn $(\sigma_n^2)$ umgebenden thermischen Rauschens ausführt, und während jedes Teilschritts (22n) der Durchführung einzelner Messungen alle Femtozellen ein Signal auf der Sendeleistung senden, die ihr bei der vorhergehenden Wiederholung zugeteilt wurde, und eine Femtozelle, FBSn genannt, dann kein Signal sendet und (N-1) Messungen der Art RSRP der empfangenen Leistung eines Signals, das von jeder anderen Femtozelle $(\alpha_{n,m} P_t^m[i-1])$ gesendet wurde, und/oder eine Messung der Art RSSI ausführt, die der Summe der von den Signalen empfangenen Leistung, die von den anderen Femtozellen FBSm gesendet wurden, der empfangenen Leistung eines Signals, das von der Basisstation des makrozellularen Netzes gesendet wurde, die von der Femtozelle FBSn $(P_r^{n,macro})$ als dominant angesehen wird, und des die Femtozelle FBSn umgebenden thermischen Rauschens entspricht.

**15.** Verfahren nach Anspruch 14, wobei während des Teilschritts (11) der Durchführung gemeinsamer Messungen jede Femtozelle FBSn eine Messung der Art RSRP der empfangenen Leistung eines Signals ausführt, das von der Basisstation des makrozellularen Netzes gesendet wurde, die von dieser Femtozelle $(P_r^{n,macro})$ als dominant angesehen wird, und während des Teilschritts (22n) der Durchführung einzelner Messungen die Femtozelle FBSn (N-1) Messungen der Art RSRP der empfangenen Leistung eines Signals ausführt, das von jeder anderen Femtozelle $(\alpha_{n,m} P_t^m[i-1])$ gesendet wurde.

**16.** Verfahren nach Anspruch 14, wobei während des Teilschritts (11) der Durchführung gemeinsamer Messungen jede Femtozelle FBSn eine Messung der Art RSRP der empfangenen Leistung eines Signals, das von der Basisstation des makrozellularen Netzes gesendet wurde, die von dieser Femtozelle $(P_r^{n,macro})$ als dominant angesehen wird, und eine Messung der Art RSSI der Summe der empfangenen Leistung eines Signals, das auf dem gemeinsamen Sendeband von der Basisstation des makrozellularen Netzes gesendet wurde, die von der Femtozelle FBSn $(P_r^{n,macro})$ als dominant angesehen wird, und des die Femtozelle FBSn $(\sigma_n^2)$ umgebenden thermischen Rauschens ausführt, und während des Teilschritts (22n) der Durchführung einzelner Messungen die Femtozelle FBSn eine Messung der Art RSSI ausführt, die der Summe der empfangenen Leistung von den Signalen, die von den anderen Femtozellen FBSm gesendet wurden, der empfangenen Leistung eines Signals, das von der Basisstation des makrozellularen Netzes gesendet wurde, die von der Femtozelle FBSn ($P_r^{n,macro}$) als dominant angesehen wird, und des die Femtozelle FBSn umgebenden thermischen Rauschens entspricht.

17. System zur Reduzierung der Gleichkanalinterferenzen aufgrund der Ausbreitung von N Femtozellen in einem makrozellularen Netz, wobei N eine ganze Zahl ist, wobei das System Einrichtungen zur Durchführung von Leistungsmessungen von auf diesem Netz gesendeten Signalen, so dass die Leistungsmessungen nur von den N Femtozellen durchgeführt werden, und diese Messungen zeitlich von einem Zentralorgan UC des Systems geordnet werden, Einrichtungen zur Optimierung der Sendeleistungen der Femtozellen abhängig von diesen Messungen, und Einrichtungen zur Zuteilung ihrer Sendeleistung zu jeder Femtozelle aufweist,
wobei das System geeignet ist, damit während der Optimierung durch die Optimierungseinrichtungen die Sendeleistungen der Femtozellen unter der Bedingung einer Aufrechterhaltung einer minimalen Dienstqualität von Endgeräten maximiert werden, die an die Basisstationen des makrozellularen Netzes angeschlossen wären,
**dadurch gekennzeichnet, dass** das System geeignet ist, damit während der Optimierung die folgende Kostenfunktion maximiert wird:

$$\max_{P_t^n} \quad c = \sum_{n=1}^{\cdot\cdot} c_n * P_t^n$$

unter der Bedingung

$$\forall n \in \{1, N\}, \quad P_t^n + \sum_{m \neq n} \frac{a_{n,m}}{\rho^2} P_t^m \leq \frac{P_r^{n,macro}}{\rho^2 \gamma_{MUE}^{target}} - \sigma_n^2 \leq \frac{P_r^{n,macro}}{\rho^2 \gamma_{MUE}^{target}}$$

wobei $P_t^n$ die Sendeleistung einer Femtozelle, FBSn genannt, $P_t^m$ die Sendeleistung einer Femtozelle, FBSm genannt, $c_n$ ein der Sendeleistung der Femtozelle FBSn zugeordneter Gewichtungskoeffizient, $\alpha_{n,m}$ der Dämpfungskoeffizient aufgrund des die Femtozelle FBSm von der Femtozelle FBSn trennenden Kanals, $P_r^{n,macro}$ die von der Femtozelle FBSn empfangene Leistung eines Signals, das von der Basisstation des makrozellularen Netzes gesendet wurde, die von der Femtozelle FBSn als dominant angesehen wird, $\sigma_n^2$ die Leistung des umgebenden thermischen Rauschens ist, das von der Femtozelle FBSn wahrgenommen wird, $\rho$ ein Koeffizient ist, der die Abdeckung der Femtozelle FBSn ausdrückt, jenseits von der ein Endgerät, das an eine Basisstation des makrozellularen Netzes angeschlossen wäre, ein Signalverhältnis mit Interferenz-plus-Rauschen höher als ein Schwellwert $\gamma_{MUE}^{target}$ feststellen würde.

18. System nach Anspruch 17, wobei jede Femtozelle ebenfalls vorgesehen ist, um ihre Sendeleistung gemäß Messungen zu optimieren, die sie durchgeführt hat.

19. System nach Anspruch 17, wobei das zentrale Organ UC ebenfalls Einrichtungen aufweist, um die von den Femtozellen durchgeführten Messungen zu sammeln, um ihre Sendeleistung zu optimieren und um ihre so optimierte Sendeleistung an diese Femtozellen zu senden.

**Claims**

1. Method for reducing co-channel interference due to the deployment of *N* femtocells in a macrocellular network, *N* being an integer, said method comprising a step (1) of taking measurements of power of signals sent over this network during which the measurements of power are only taken by the *N* femtocells and these measurements are ordered temporally by a central facility UC of the system, a step (3) of optimising the transmission powers of the femtocells according to these measurements, and a step (4) of allocating to each femtocell its transmission power,

the method being such that, during the step (3) of optimising, the transmission powers of the femtocells are maximised under the constraint of maintaining a minimum quality of service of terminals that would be attached to the base stations in the macrocellular network,

**characterised in that** the method is such that, during the step (3) of optimising, the following cost function is maximised:

$$\max_{P_t^n} \quad c = \sum_{n=1}^{N} P_t^n$$

under the constraint:

$$\forall n \in \{1, N\}, \qquad P_t^n + \sum_{m \neq n} \frac{\alpha_{n,m}}{\rho^2} P_t^m \leq \frac{P_r^{n,macro}}{\rho^2 \gamma_{MUE}^{target}} - \sigma_n^2 \leq \frac{P_r^{n,macro}}{\rho^2 \gamma_{MUE}^{target}}$$

where $P_t^n$ is the transmission power of a femtocell, referred to as FBSn, $P_t^m$ is the transmission power of a femtocell, referred to as FBSm, $c_n$ is a weighting coefficient associated with the transmission power of the femtocell FBSn, $\alpha_{n,m}$ is the coefficient of attenuation due to the channel separating the femtocell FBSm from the femtocell FBSn, $P_r^{n,macro}$ is the power received by the femtocell FBSn from a signal that was sent by the base station in the macrocellular network considered to be dominant by the femtocell FBSn, $\sigma_n^2$ is the power of the surrounding thermal noise perceived by the femtocell FBSn, $\rho$ a coefficient that represents the coverage of the femtocell FBSn beyond which a terminal that would be attached to a base station in the macrocellular network would see a signal to interference-plus-noise ratio greater than a threshold value $\gamma_{MUE}^{target}$.

2. Method according to claim 1, in which, during the step of allocating, the transmission power of a femtocell estimated during the step (3) of optimising is limited to the extreme values of a range of power values of this femtocell.

3. Method according to claim 1, in which, during the step of allocating, a zero transmission power is allocated to a femtocell if its transmission power estimated during the step (3) of optimising is zero.

4. Method according to claim 1, in which, during the step of allocating, a zero transmission power is allocated to a femtocell if its estimated transmission power is less than a minimum transmission power.

5. Method according to one of claims 3 or 4, in which, when a zero transmission power is allocated to a femtocell, when a terminal is attached to this femtocell and when the terminal is currently communicating, a transfer procedure is initiated so that this terminal attaches either to another femtocell situated close by and to which it is authorised to attach itself or to a base station in the macrocellular network.

6. Method according to one of claims 3 to 5, in which this femtocell switches off its radio part but remains connected to the network so as to be able to be taken into account during a new optimisation of the transmission powers of the femtocells and a non-zero transmission power is allocated thereto.

7. Method according to one of the preceding claims, in which the steps of the method are performed periodically and/or when the traffic on these femtocells is low and/or as soon as the central facility UC detects that a new femtocell is connected to the network or that a femtocell is no longer connected to the network.

8. Method according to one of claims 1 to 7, in which the step (1) of taking measurements comprises a substep (11) of taking measurements common to the femtocells and $N$ successive substeps (12m, 22n) of taking individual measurements.

9. Method according to claim 8, which comprises a step (2) of collecting the measurements by the central facility UC followed by the step (3) of optimising that is implemented by this central facility UC followed by the step (4) of allocating during which the central facility UC sends to each femtocell a signal that carries the transmission power of this femtocell.

**10.** Method according to claim 9, in which, during the substep (11) of taking common measurements, no femtocell sends any signal and each femtocell, referred to as FBSn, performs an RSRP measurement of the received power of a signal that was sent by the base station in the macrocellular network considered dominant by the femtocell FBSn ($P_r^{n,macro}$), and/or an RSSI measurement of the sum of the received power of a signal that was sent on the common transmission band by the base station in the macrocellular network considered to be dominant by the femtocell FBSn ($P_r^{n,macro}$), and the thermal noise surrounding the femtocell FBSn ($\sigma_n^2$), and, during each substep (12m) of taking individual measurements, a femtocell, referred to as FBSm, sends a signal at its maximum power ($P_{max}^m$) and each of the other (N-1) femtocells, referred to as FBSn, then makes an RSRP measurement of the received power of a signal that was sent by the femtocell FBSm ($\alpha_{n,m}P_{max}^n$) and/or an RSSI measurement that corresponds to the sum of the received power of a signal sent at maximum power by the femtocell FBSm, the received power of a signal that was sent by the base station in the macrocellular network considered to be dominant by the femtocell FBSn ($P_r^{n,macro}$) and the thermal noise surrounding the femtocell FBSn.

**11.** Method according to claim 10, in which, during the substep (11) of taking common measurements, each femtocell FBSn makes an RSRP measurement of the received power of a signal that was sent by the base station in the macrocellular network considered to be dominant by this femtocell ($P_r^{n,macro}$) and, during each substep (12m) of taking individual measurements, each of the other (N-1) femtocells FBSn then makes an RSRP measurement of the received power of a signal that was sent by the femtocell FBSm ($\alpha_{n,m}P_{max}^n$).

**12.** Method according to claim 10, in which, during the substep (11) of taking common measurements, each femtocell FBSn makes an RSRP measurement of the received power of a signal that was sent by the base station in the macrocellular network considered dominant by this femtocell ($P_r^{n,macro}$) and an RSSI measurement of the sum of the received power of a signal that was sent over the common transmission band by the base station in the macrocellular network considered to be dominant by the femtocell FBSn ($P_r^{n,macro}$), and the thermal noise surrounding the femtocell FBSn ($\sigma_n^2$), and, during each substep (12m) of taking individual measurements, each of the other (N-1) femtocells FBSn makes a measurement of the RSSI type that corresponds to the sum of the received power of a signal send at maximum power by the femtocell FBSn, the received power of a signal that was sent by the base station in the macrocellular network considered to be dominant by the femtocell FBSn ($P_r^{n,macro}$) and the thermal noise surrounding the femtocell FBSn.

**13.** Method according to claim 8, in which the step (1) of taking measurements, the step (3) of optimising that is implemented by each femtocell, and the step (4) of allocating during which the femtocell replaces its current transmission power by the transmission power thus optimised, are iterated.

**14.** Method according to claim 13, in which, during the substep (11) of taking common measurements, no femtocell sends a signal and each femtocell referred to as FBSn makes an RSRP measurement of the received power of a signal that was sent by the base station in the macrocellular network considered to be dominant by the femtocell FBSn ($P_r^{n,macro}$), and/or an RSSI measurement of the sum of the received power of a signal that was sent over the common transmission band by the base station in the macrocellular network considered to be dominant by the femtocell FBSn, ($P_r^{n,macro}$), and the thermal noise surrounding the femtocell FBSn ($\sigma_n^2$), and, during each substep (22n) of taking individual measurements, all the femtocells send a signal at the transmission power that was allocated to it at the previous iteration, and a femtocell referred to as FBSn then does not send a signal and makes (N-1) RSRP measurements of the received power of a signal that was sent by each other femtocell ($\alpha_{n,m}P_t^m[i-1]$) and/or an RSSI measurement that corresponds to the sum of the received power of the signals that were sent by the other femtocells FBSm, the received power of a signal that was sent by the base station in the macrocellular network considered to be dominant by the femtocell FBSn ( $P_r^{n,macro}$ ) and the thermal noise surrounding the femtocell FBSn.

15. Method according to claim 14, in which, during the substep (11) of taking common measurements, each femtocell FBSn makes an RSRP measurement of the received power of a signal that was sent by the base station in the macrocellular network considered to be dominant by this femtocell ( $P_r^{n,macro}$ ) and, during the substep (22n) of taking individual measurements, the femtocell FBSn makes (N-1) RSRP measurements of the received power of a signal that was sent by each other femtocell ( $\alpha_{n,m} P_t^m [i-1]$ ).

16. Method according to claim 14, in which, during the substep (11) of taking common measurements, each femtocell FBSn makes an RSRP measurement of the received power of a signal that was sent by the base station in the macrocellular network considered dominant by this femtocell ( $P_r^{n,macro}$ ) and an RSSI measurement of the sum of the received power of a signal that was sent over the common transmission band by the base station in the macrocellular network considered to be dominant by the femtocell FBSn ( $P_r^{n,macro}$ ) and the thermal noise surrounding the femtocell FBSn ( $\sigma_n^2$ ) and, during the substep (22n) of taking individual measurements, the femtocell FBSn makes a measurement of the RSSI type that corresponds to the sum of the received power of the signals that were sent by the other femtocells FBSm, the received power of a signal that was sent by the base station in the macrocellular network considered to be dominant by the femtocell FBSn ( $P_r^{n,macro}$ ) and the thermal noise surrounding the femtocell FBSn.

17. System for reducing co-channel interference due to the deployment of N femtocells in a macrocellular network, N being an integer, said system comprising means for taking measurements of power of signals sent over this network such that the measurements of power are only taken by the N femtocells and these measurements are ordered temporally by a central facility UC of the system, means for optimising the transmission powers of the femtocells according to these measurements, and means for allocating to each femtocell its transmission power,
the method being adapted such that, during the step (3) of optimising by said means for optimising, the transmission powers of the femtocells are maximised under the constraint of maintaining a minimum quality of service of terminals that would be attached to the base stations in the macrocellular network,
the system being adapted such that, when optimising, the following cost function is maximised:

$$\max_{P_t^n} \quad c = \sum_{n=1}^{N} P_t^n$$

under the constraint:

$$\forall n \in \{1, N\}, \quad P_t^n + \sum_{m \neq n} \frac{\alpha_{n,m}}{\rho^2} P_t^m \leq \frac{P_r^{n,macro}}{\rho^2 \gamma_{MUE}^{target}} - \sigma_n^2 \leq \frac{P_r^{n,macro}}{\rho^2 \gamma_{MUE}^{target}}$$

where $P_t^n$ is the transmission power of a femtocell, referred to as FBSn, $P_t^m$ is the transmission power of a femtocell, referred to as FBSm, $c_n$ is a weighting coefficient associated with the transmission power of the femtocell FBSn, $\alpha_{n,m}$ is the coefficient of attenuation due to the channel separating the femtocell FBSm from the femtocell FBSn, $P_r^{n,macro}$ is the power received by the femtocell FBSn from a signal that was sent by the base station in the macrocellular network considered to be dominant by the femtocell FBSn, $\sigma_n^2$ is the power of the surrounding thermal noise perceived by the femtocell FBSn, $\rho$ a coefficient that represents the coverage of the femtocell FBSn beyond which a terminal that would be attached to a base station in the macrocellular network would see a signal to interference-plus-noise ratio greater than a threshold value $\gamma_{MUE}^{target}$.

18. System according to claim 17, in which each femtocell is also designed to optimise its transmission power according to measurements that it has taken.

19. System according to claim 17, in which the central facility UC also comprises means for collecting the measurements taken by the femtocells, in order to optimise their transmission power and to send to these femtocells their transmission power thus optimised.

Fig. 1

Fig. 2

**Fig. 3**

Fig. 4

R

| ID | CMD(PA) |
|---|---|

RE

| R.ID | INFO(PA) |
|---|---|

**Fig. 5a**

REQ1

| ID | CMD1 |
|---|---|

REQ2

| ID | CMD2(FBS1,...FBSN, MBS) |
|---|---|

REQ3

| ID | CMD3 |
|---|---|

REQ4

| ID | CMD4 |
|---|---|

REQ5

| ID | CMD5(PA) |
|---|---|

REQ6

| ID | CMD6 |
|---|---|

AN

| REQ4.ID | $(REQ1.ID, RSSI)$ $(REQ2.ID, RSRP_n^m)$ $(REQ3.ID, RSSI_n^1 \quad RSRP_n^1)$ $P_{min}^n \quad P_{max}^n$ |
|---|---|

**Fig. 5b**

UC FBSn

| 0 | CMD3 |

| 1 | CMD1 |

| n-1 | CMD1 |

| n | CMD6 |

| n+1 | CMD1 |

| N | CMD1 |

| N+1 | CMD4 |

| N+1 | $(0, RSSI_n^0, RSRP_n^0)$ $(1, RSSI_n^1) (2, RSSI_n^2)$ ... $(n\text{-}1, RSSI_n^{n-1})(n\text{+}1, RSSI_n^{n+1})$ ... $(N, RSSI_n^N) ( P_{min}^n , P_{max}^n )$ |

| N+2 | CMD5 ( $P_t^n$ ) |

**Fig. 6**

**Fig. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009316585 A1
- US 2009042593 A1
- EP 2152041 A1

**Littérature non-brevet citée dans la description**

- **X. LI et al.** Downlink Power Control in Co-Channel Macrocell Femtocell Overlay. *IEEE 43rd Annual Conference on Information Sciences and Systems (CISS'09),* Juin 2009, 383-388
- **N. ARULSELVAN et al.** Distributed Power Control Mechanisms for HSDPA Femtocells. *69th IEEE Conference on Vehicular Technology,* 2009
- Physical layer ; Measurements (FDD) (Release 9). *3GPP TS 25.215,* Mars 2010
- Evolved Universal Terrestrial Radio Access ; Physical layer ; Measurements (FDD) (Release 9). *3GPP TS 36.214,* Juin 2010